(19) Europäisches Patentamt
European Patent Office
Office européen des brevets

(11) EP 4 220 774 A1

(12) EUROPEAN PATENT APPLICATION
published in accordance with Art. 153(4) EPC

(43) Date of publication:
**02.08.2023 Bulletin 2023/31**

(21) Application number: **20957129.8**

(22) Date of filing: **15.10.2020**

(51) International Patent Classification (IPC):
***H01M 4/62*** (2006.01) ***H01M 10/0569*** (2010.01)

(52) Cooperative Patent Classification (CPC):
Y02E 60/10

(86) International application number:
**PCT/CN2020/121179**

(87) International publication number:
**WO 2022/077350 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Ningde, Fujian 352100 (CN)**

(72) Inventors:
- **WANG, Kefei**
**Ningde, Fujian 352100 (CN)**
- **JIANG, Bing**
**Ningde, Fujian 352100 (CN)**
- **ZHANG, Qingwen**
**Ningde, Fujian 352100 (CN)**
- **DU, Changchao**
**Ningde, Fujian 352100 (CN)**

(74) Representative: **Icosa**
**83 avenue Denfert-Rochereau**
**75014 Paris (FR)**

# (54) ELECTROCHEMICAL DEVICE AND ELECTRONIC DEVICE

(57) An electrochemical apparatus and an electronic apparatus are provided. The electrochemical apparatus includes a positive electrode, a negative electrode, and an electrolyte, the negative electrode includes a negative electrode current collector and a negative electrode mixture layer formed on the negative electrode current collector, the negative electrode mixture layer includes a negative electrode active substance, there is specific adhesion strength for the negative electrode active substance, and the electrolyte includes propionate. The electrochemical apparatus in this application has improved high-temperature storage performance and overcharge protection performance.

EP 4 220 774 A1

## Description

### TECHNICAL FIELD

This application relates to the field of energy storage, specifically to an electrochemical apparatus and an electronic apparatus, and in particular to a lithium-ion battery.

### BACKGROUND

In recent years, as the scale for the battery industry has continuously expanded and related art has continuously developed, application of electrochemical apparatuses (for example, lithium-ion batteries) has been enormously broadened, making the electrochemical apparatuses become energy storage devices for mainstream electronic products. As demands increase, increasingly high performance requirements are also raised for lithium-ion batteries, and manufacturing processes have also been continuously optimized.

Because raw materials vary greatly and each have their advantages and disadvantages, it is typical to combine a variety of raw materials in use. However, different materials may be poorly matched in the lending process, which degrades the performance of batteries.

In view of this, it is necessary to provide an electrochemical apparatus and an electronic apparatus with improved performance.

### SUMMARY

Embodiments of this application provide an electrochemical apparatus and an electronic apparatus with improved high-temperature storage performance and overcharge protection performance, so as to resolve at least one problem existing in the related art to at least some extent.

According to one aspect of this application, the electrochemical apparatus includes a positive electrode, a negative electrode, and an electrolyte, the negative electrode includes a negative electrode current collector and a negative electrode mixture layer formed on the negative electrode current collector, the negative electrode mixture layer includes a negative electrode active substance, adhesion strength of the negative electrode active substance is F $N/cm^2$, and F ranges from 100 to 500; and the electrolyte includes propionate.

According to an embodiment of this application, the negative electrode mixture layer includes rubber, and the rubber includes at least one of styrene-butadiene rubber, isoprene rubber, butadiene rubber, fluorine rubber, acrylonitrile-butadiene rubber, or styrene-propylene rubber.

According to an embodiment of this application, the rubber further includes at least one of an acrylic functional group, a chlorotrifluoroethylene functional group, or a hexafluoropropylene functional group.

According to an embodiment of this application, based on a weight of the electrolyte, the percentage of the propionate is X%, and X ranges from 5 to 65.

According to an embodiment of this application, F and X satisfy $1.6 \leq F/X \leq 100$.

According to an embodiment of this application, a specific surface area of the negative electrode mixture layer is A $m^2/g$, and A ranges from 2 to 5.

According to an embodiment of this application, F and A satisfy $20 \leq F/A \leq 250$.

According to an embodiment of this application, the negative electrode active substance has at least one of the following characteristics:

(a) having a median particle size of 5 μm to 30 μm;
(b) including at least one of artificial graphite, natural graphite, mesocarbon microbeads, soft carbon, hard carbon, amorphous carbon, a silicon-containing material, a tin-containing material, or an alloy material; or
(c) including metal, where the metal includes at least one of molybdenum, iron, or copper, and based on a weight of the negative electrode mixture layer, a percentage of the metal is lower than 0.05%.

According to an embodiment of this application, the electrolyte further includes at least one of the following compounds:

(i) fluorocarbonate;
(ii) a compound having a cyano group;
(iii) lithium difluorophosphate; or
(iv) a compound of formula 1:

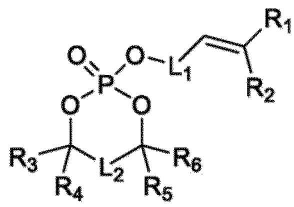

formula 1,

where $R^1$, $R^2$, $R^3$, $R^4$, $R^5$, and $R^6$ are each independently hydrogen or a $C_1$-$C_{10}$ alkyl group;
$L_1$ and $L_2$ are each independently $-(CR^7R^8)_n-$;
$R^7$ and $R^8$ are each independently hydrogen or a $C_1$-$C_{10}$ alkyl group; and
n is 1, 2, or 3.

According to an embodiment of this application, the compound of formula 1 includes at least one of the following compounds:

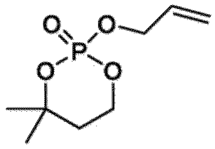

formula 1-1,

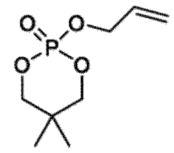

formula 1-2,

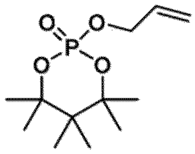

formula 1-3,

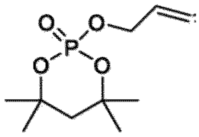

formula 1-4,

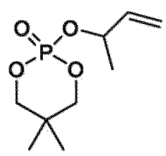

formula 1-5, or

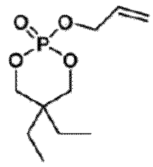

formula 1-6.

According to an embodiment of this application, based on the weight of the electrolyte, the percentage of the compound of formula 1 ranges from 0.01% to 5%.

According to an embodiment of this application, based on the weight of the electrolyte, the percentage of the compound having a cyano group is b%, and b ranges from 0.01 to 10.

According to an embodiment of this application, X and b satisfy $0.5 \leq X/b \leq 200$.

According to another aspect of this application, this application provides an electronic apparatus, including the electrochemical apparatus according to this application.

Additional aspects and advantages of the embodiments of this application are partly described and presented in subsequent descriptions, or explained by implementation of the embodiments of this application.

## DESCRIPTION OF EMBODIMENTS

Embodiments of this application are described in detail below. The embodiments of this application should not be construed as a limitation on this application.

Unless otherwise expressly indicated, the following terms used in this specification have the meanings described below.

In the specific embodiments and claims, a list of items connected by the term "at least one of" may mean any combination of the listed items. For example, if items A and B are listed, the phrase "at least one of A and B" means only A; only B; or A and B. In another example, if items A, B, and C are listed, the phrase "at least one of A, B, and C" means only A; only B; only C; A and B (exclusive of C); A and C (exclusive of B); B and C (exclusive of A); or all of A, B, and C. The item A may contain a single element or a plurality of elements. The item B may contain a single element

or a plurality of elements. The item C may contain a single element or a plurality of elements. The term "at least one type of" has the same meaning as the term "at least one of".

The term "alkyl group" used herein is intended to be a straight-chain saturated hydrocarbon structure having 1 to 20 carbon atoms. The term "alkyl group" is also intended to be a branched or cyclic hydrocarbon structure having 3 to 20 carbon atoms. References to an alkyl group with a specific number of carbon atoms are intended to cover all geometric isomers with the specific number of carbon atoms. Therefore, for example, "butyl" is meant to include n-butyl, sec-butyl, isobutyl, tert-butyl, and cyclobutyl; and "propyl" includes n-propyl, isopropyl, and cyclopropyl. Examples of the alkyl group include but are not limited to a methyl group, an ethyl group, an n-propyl group, an isopropyl group, an cyclopropyl group, an n-butyl group, an isobutyl group, a sec-butyl group, a tert-butyl group, a cyclobutyl group, an n-pentyl group, an isopentyl group, a neopentyl group, a cyclopentyl group, a methylcyclopentyl group, an ethylcyclopentyl group, an n-hexyl group, an isohexyl group, a cyclohexyl group, an n-heptyl group, an octyl group, a cyclopropyl group, a cyclobutyl group, and a norbornyl group.

As used in this specification, the term "halogenated" means that some or all of hydrogen atoms in a group are substituted with halogen (for example, fluorine, chlorine, bromine, or iodine) atoms.

As electrochemical apparatuses (for example, lithium-ion batteries) are widely applied, increasingly high requirements are also raised for performance of the electrochemical apparatuses, especially, for safety. When a lithium-ion battery is under high temperature or an overcharged condition, a large amount of heat is easily generated inside the lithium-ion battery. When the heat cannot be released uniformly, aging, swelling, deformation, or even explosion of the lithium-ion battery is caused.

In order to resolve the foregoing problems, a negative electrode active substance with specific adhesion strength and an electrolyte including propionate are combined for use in this application, which can prevent the negative electrode from breaking during high-temperature storage and can fully exert capacity of the electrochemical apparatus, thereby significantly improving high-temperature storage performance and overcharge protection performance of the electrochemical apparatus.

In an embodiment, this application provides an electrochemical apparatus, including a positive electrode, a negative electrode, and an electrolyte described below.

I. Negative electrode

The negative electrode includes a negative electrode current collector and a negative electrode mixture layer disposed on one or two surfaces of the negative electrode current collector.

1. Negative electrode mixture layer

The negative electrode mixture layer includes a negative electrode active substance layer, and the negative electrode active substance layer includes a negative electrode active substance. The may be one or more negative electrode mixture layers, and each of a plurality of layers of the negative electrode active substance may include the same or different negative electrode active substances. The negative electrode active substance is any substance capable of reversibly intercalating and deintercalating metal ions such as lithium ions. In some embodiments, a rechargeable capacity of the negative electrode active substance is greater than a discharge capacity of the positive electrode active substance to prevent lithium metal from unexpectedly precipitating onto the negative electrode during charging.

One characteristic of the electrochemical apparatus in this application is that adhesion strength of the negative electrode active substance is F $N/cm^2$, and F ranges from 100 to 500. In some embodiments, F ranges from 150 to 450. In some embodiments, F ranges from 200 to 400. In some embodiments, F is 100, 150, 200, 250, 300, 350, 400, 450, or 500, or is within a range defined by any two of the foregoing values. When the adhesion strength of the negative electrode active substance is within the foregoing range, the high-temperature storage performance and overcharge protection performance of the electrochemical apparatus can be significantly improved.

The adhesion strength of the negative electrode active substance is one of parameters characterizing properties of the negative electrode active substance, and can be adjusted by adding specific substance (for example, rubber) or adjusting a formulation, a coating process, and the like of negative electrode slurry.

The adhesion strength of the negative electrode active substance can be measured in the following method: A 2 cm $\times$ 3 cm negative electrode is cut off, the negative electrode mixture layer is peeled from one surface of the negative electrode, and another surface of the negative electrode is pasted on a double-sided tape pasted on a glass pane (Batch No. 515, Nitto Denko Co., Ltd.). Then, a negative electrode current collector is peeled off, to obtain a negative electrode mixture layer pasted on the double-sided tape, which is used as a sample under test. A side of the sample under test with the double-sided tape is installed on a tip of a measuring head (a diameter of the tip is 0.2 cm) of an adhesion tester (trade name: TAC-II, RHESCA Co., Ltd.). Then, a measuring probe is pressed into the negative electrode mixture layer and pulled off under the following condition to perform a peeling test. In this peeling test, a

maximum load causing peeling for the negative electrode active substance is measured. A value obtained by dividing an obtained maximum load by a cross-sectional area of the measuring head (0.031 $cm^2$) is recorded as the adhesion strength of negative electrode active substance.

Test conditions are as follows:

a pressing speed of the measuring probe is 30 mm/min;
pressing time of the measuring probe is 10 seconds;
a pressing load of the measuring probe is 3.9N; and
a pull-off speed of the measuring probe is 600 mm/min.

In some embodiments, the negative electrode mixture layer includes rubber. The rubber can effectively enhance interfacial stability of the negative electrode mixture layer, thereby significantly improving the high-temperature storage performance and overcharge protection performance of the electrochemical apparatus.

In some embodiments, rubber includes at least one of styrene-butadiene rubber, isoprene rubber, butadiene rubber, fluorine rubber, acrylonitrile-butadiene rubber, or styrene-propylene rubber.

In some embodiments, rubber further includes at least one of an acrylic functional group, a chlorotrifluoroethylene functional group, or a hexafluoropropylene functional group.

In some embodiments, based on the weight of the negative electrode mixture layer, a percentage of rubber is lower than 10%. In some embodiments, based on the weight of the negative electrode mixture layer, a percentage of rubber is lower than 8%. In some embodiments, based on the weight of the negative electrode mixture layer, a percentage of rubber is lower than 5%. In some embodiments, based on the weight of the negative electrode mixture layer, a percentage of rubber is lower than 3%. In some embodiments, based on the weight of the negative electrode mixture layer, a percentage of rubber is lower than 2%.

In some embodiments, a specific surface area of the negative electrode mixture layer is A $m^2/g$, and A ranges from 2 to 5. In some embodiments, A ranges from 3 to 4. In some embodiments, A is 2, 2.5, 3, 3.5, 4, or 4.5, or is within a range defined by any two of the foregoing values. When the specific surface area of the negative electrode mixture layer is within the foregoing range, lithium may be inhibited from precipitating on a surface of the negative electrode, and gas generation caused by a reaction between the negative electrode and the electrolyte is inhibited, thereby further improving the high-temperature storage performance and the overcharge protection performance of the electrochemical apparatus.

The specific surface area (BET) of the negative electrode mixture layer can be measured in the following method: being measured using a surface area meter (the full-automatic surface area measuring apparatus manufactured by Ohkura Riken Co., Ltd.) according to single point BET nitrogen adsorption using the dynamic flow method by predrying a sample for 15 minutes at 350°C in the presence of flowing nitrogen followed by using a nitrogen-helium mixed gas whose value of the relative pressure of nitrogen to atmospheric pressure is accurately adjusted to 0.3.

In some embodiments, adhesion strength F $N/cm^2$ of the negative electrode active substance and the specific surface area A $m^2/g$ of the negative electrode mixture layer satisfy $20 \leq F/A \leq 250$. In some embodiments, $30 \leq F/A \leq 240$. In some embodiments, $50 \leq F/A \leq 200$. In some embodiments, $60 \leq F/A \leq 150$. In some embodiments, F/A is 20, 30, 40, 50, 60, 70, 80, 90, 100, 110, 120, 125, 150, 180, 200, 240, or 250, or is within a range defined by any two of the foregoing values. When the adhesion strength F $N/cm^2$ of the negative electrode active substance and the specific surface area A $m^2/g$ of the negative electrode mixture layer satisfy the foregoing relationship, the high-temperature storage performance and overcharge protection performance of the electrochemical apparatus can be further improved.

In some embodiments, the negative electrode active substance has at least one of the following characteristics (a) to (c):

<u>(a) Median particle size (D50)</u>

A median particle size (D50) of the negative electrode active substance refers to a median particle size by volume obtained in a laser diffraction/scattering method.

In some embodiments, the negative electrode active substance has a median particle size of 5 μm to 30 μm. In some embodiments, the negative electrode active substance has a median particle size of 10 μm to 25 μm. In some embodiments, the negative electrode active substance has a median particle size of 15 μm to 20 μm. In some embodiments, the negative electrode active substance has a median particle size of 1 μm, 3 μm, 5 μm, 7 μm, 10 μm, 15 μm, 20 μm, 25 μm, or 30 μm approximately, or within a range defined by any two of the foregoing values. When the median particle size of the negative electrode active substance is within the foregoing range, irreversible capacity of the electrochemical apparatus is small and it is easy to coat the negative electrode uniformly.

The median particle size (D50) of the negative electrode active substance can be measured in the following method: The negative electrode active substance is dispersed in a 0.2% aqueous solution (approximately 10 mL) of

polyoxyethylene (20) sorbitan monolaurate, and a laser diffraction/scattering particle size distribution meter (LA-700 manufactured by Horiba, Ltd.) is used for a test.

(b) Type of negative electrode active substance

In some embodiments, the negative electrode active substance includes at least one of artificial graphite, natural graphite, mesocarbon microbeads, soft carbon, hard carbon, amorphous carbon, a silicon-containing material, a tin-containing material, or an alloy material.
In some embodiments, shapes of the negative electrode active substance include but are not limited to fibrous, spherical, granular and scaly.
In some embodiments, based on an X-ray diffraction pattern in Gakushin Law, an interlayer distance of a lattice plane (plane 002) of the negative electrode active substance ranges from 0.335 nm to 0.360 nm approximately, from 0.335 nm to 0.350 nm approximately, or from 0.335 nm to 0.345 nm approximately.
In some embodiments, based on the X-ray diffraction pattern in the Gakushin Law, a crystallite size (Lc) of the negative electrode active substance is greater than 1.0 nm or 1.5 nm approximately.
In some embodiments, a Raman R value of the negative electrode active substance is greater than 0.01, 0.03, or 0.1 approximately. In some embodiments, a Raman R value of the negative electrode active substance is less than 1.5, 1.2, 1.0, or 0.5 approximately. In some embodiments, the Raman R value of the negative electrode active substance is within a range defined by any two of the foregoing values.
Raman peak width of the negative electrode active substance at half height around 1580 $cm^{-1}$ is not particularly limited. In some embodiments, the Raman peak width of the negative electrode active substance at half height around 1580 $cm^{-1}$ is greater than 10 $cm^{-1}$ or 15 $cm^{-1}$ approximately. In some embodiments, the Raman peak width of the negative electrode active substance at half height around 1580 $cm^{-1}$ is less than 100 $cm^{-1}$, 80 $cm^{-1}$, 60 $cm^{-1}$, or 40 $cm^{-1}$ approximately. In some embodiments, the Raman peak width of the negative electrode active substance at half height around 1580 $cm^{-1}$ is within a range defined by any two of the foregoing values.
In some embodiments, a length-width ratio of the negative electrode active substance is greater than 1, 2, or 3 approximately. In some embodiments, the length-width ratio of the negative electrode active substance is less than 10, 8, or 5 approximately. In some embodiments, the length-width ratio of the negative electrode active substance is within a range defined by any two of the foregoing values. When the length-width ratio of the negative electrode active substance is within the foregoing range, coating can be performed more uniformly.

(c) Trace element

In some embodiments, the negative electrode active substance includes metal, and the metal includes at least one of molybdenum, iron, or copper. These metal elements can react with some organic substances with poor electrical conductivity in the negative electrode active substance, to facilitate film formation on a surface of the negative electrode active substance.
In some embodiments, the foregoing metal element exists in the negative electrode mixture layer in a trace amount, so as to avoid generation of a non-conductive by-product and adhesion of the non-conductive by-product to the surface of the negative electrode. In some embodiments, based on the weight of the negative electrode mixture layer, a percentage of the metal is less than 0.05%. In some embodiments, based on the weight of the negative electrode mixture layer, the percentage of the metal is less than 0.04%. In some embodiments, based on the weight of the negative electrode mixture layer, the percentage of the metal is less than 0.03%. In some embodiments, based on the weight of the negative electrode mixture layer, the percentage of the metal is less than 0.01%. When the percentage of metal in the negative electrode mixture layer is within the foregoing range, the high-temperature storage performance and overcharge protection performance of the electrochemical apparatus can be further improved.
In some embodiments, the negative electrode mixture layer further includes at least one of a silicon-containing material, a tin-containing material, or an alloy material. In some embodiments, the negative electrode mixture layer further includes at least one of a silicon-containing material or a tin-containing material. In some embodiments, the negative electrode mixture layer further includes one or more of a silicon-containing material, a silicon-carbon composite material, a silicon-oxygen material, an alloy material, and a lithium-containing metal composite oxide material.
In some embodiments, the negative electrode mixture layer further includes another type of negative electrode active substance, for example, one or more materials containing a metal element and a metalloid element capable of forming an alloy with lithium. In some embodiments, examples of the metal element and metalloid element include but are not limited to Mg, B, Al, Ga, In, Si, Ge, Sn, Pb, Bi, Cd, Ag, Zn, Hf, Zr, Y, Pd and Pt. In some embodiments, examples of the metal element and metalloid element include Si, Sn, or a combination thereof. Si and Sn have excellent capabilities of intercalating and deintercalating lithium ions, which can provide high energy density for the lithium-ion battery. In some embodiments, another type of negative electrode active substance may also include one or more of metal oxides

and polymer compounds. In some embodiments, metal oxides include but are not limited to iron oxide, ruthenium oxide, and molybdenum oxide. In some embodiments, the polymer compounds include but are not limited to polyacetylene, polyaniline, and polypyrrole.

Negative electrode conductive material

In some embodiments, the negative electrode mixture layer further includes a negative electrode conductive material, and the conductive material may include any conductive material, provided that the conductive material causes no chemical change. Non-limiting examples of the conductive material include a carbon-based material (for example, natural graphite, artificial graphite, carbon black, acetylene black, Ketjen black, and carbon fiber), a conductive polymer (for example, a polyphenylene derivative), and a mixture thereof.

Negative electrode binder

In some embodiments, the negative electrode mixture layer further includes a negative electrode binder. The negative electrode binder can improve binding between particles of the negative electrode active substance and binding between the negative electrode active substance and the current collector. The negative electrode binder is not particularly limited in type, provided that its material is stable to the electrolyte or a solvent used in manufacturing of the electrode.

Examples of the negative electrode binder include but are not limited to a resin-based polymer such as polyethylene, polypropylene, polyethylene glycol terephthalate, polymethyl methacrylate, aromatic polyamide, polyimide, cellulose, or nitrocellulose; a rubbery polymer such as styrene-butadiene rubber (SBR), isoprene rubber, polybutadiene rubber, fluorine rubber, acrylonitrile·butadiene rubber (NBR), or ethylene·propylene rubber; styrene·butadiene·styrene block copolymer or hydride thereof; a thermoplastic elastomeric polymer such as ethylene·propylene·diene terpolymer (EPDM), styrene·ethylene·butadiene·styrene copolymer, styrene·isoprene·styrene block copolymer or hydride thereof; a soft resinous polymer such as syndiotactic-1,2-polybutadiene, polyvinyl acetate, ethylene vinyl acetate copolymer, propylene·$\alpha$- olefin copolymer; a fluorine polymer such as polyvinylidene fluoride, polytetrafluoroethylene, fluorinated polyvinylidene fluoride, polytetrafluoroethylene·ethylene copolymer; and a polymer composition having ion conductivity of alkali metal ions (for example, lithium ions). The foregoing negative electrode binder may be used alone or in any combination.

When the negative electrode mixture layer includes the fluorine polymer (for example, polyvinylidene fluoride), in some embodiments, based on the weight of the negative electrode mixture layer, a percentage of the negative electrode binder is higher than 1%, 2%, or 3% approximately. In some embodiments, based on the weight of the negative electrode mixture layer, the percentage of the negative electrode binder is lower than 10%, 8%, or 5% approximately. based on the weight of the negative electrode mixture layer, the percentage of the negative electrode binder is within a range defined by any two of the foregoing values.

Solvent

The solvent used for forming the negative electrode slurry is not particularly limited in type, provided that the solvent is capable of dissolving or dispersing the negative electrode active substance, the negative electrode binder, and the thickener and the conductive material that are used as required. In some embodiments, either of an aqueous solvent and an organic solvent may be used as the solvent for forming the negative electrode slurry. Examples of the aqueous solvent may include but are not limited to water and alcohol. Examples of the organic solvent may include but are not limited to N-methylpyrrolidone (NMP), dimethylformamide, dimethylacetamide, methyl ethyl ketone, cyclohexanone, methyl acetate, methyl acrylate, diethyltriamine, N,N-dimethylaminopropylamine, tetrahydrofuran (THF), toluene, acetone, diethyl ether, hexamethylphosphoramide, dimethyl sulfoxide, benzene, xylene, quinoline, pyridine, methylnaphthalene, and hexane. The foregoing solvent may be used alone or in any combination.

Thickener

The thickener is usually used to adjust viscosity of the negative electrode slurry. The thickener is not particularly limited in type, and examples of the thickener may include but are not limited to carboxymethyl cellulose, methyl cellulose, hydroxymethyl cellulose, ethyl cellulose, polyvinyl alcohol, oxidized starch, phosphorylated starch, casein, and salt thereof. The foregoing thickener may be used alone or in any combination.

In some embodiments, based on the weight of the negative electrode mixture layer, a percentage of the thickener is higher than 0.1%, 0.5%, or 0.6% approximately. In some embodiments, based on the weight of the negative electrode mixture layer, the percentage of the thickener is lower than 5%, 3%, or 2% approximately. When the percentage of the thickener is within the foregoing range, a reduction in capacity and an increase in resistance of the electrochemical

apparatus can be inhibited, and a good coating characteristic of the negative electrode slurry can also be ensured.

Surface coating

In some embodiments, a substance with a composition different from that of the negative electrode mixture layer may be attached to a surface of the negative electrode mixture layer. Examples of the surface-attached substance of the negative electrode mixture layer include but are not limited to oxides such as aluminum oxide, silicon dioxide, titanium dioxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; and carbonates such as lithium carbonate, calcium carbonate, and magnesium carbonate.

Percentage of negative electrode active substance

In some embodiments, based on the weight of the negative electrode mixture layer, a percentage of the negative electrode active substance is higher than 80%, 82%, or 84% approximately. In some embodiments, based on the weight of the negative electrode mixture layer, the percentage of the negative electrode active substance is lower than 99% or 98% approximately. In some embodiments, based on the weight of the negative electrode mixture layer, the percentage of the negative electrode active substance is within a range defined by any two of the foregoing values.

Density of negative electrode active substance

In some embodiments, the density of the negative electrode active substance in the negative electrode mixture layer is greater than 1 g/cm$^3$, 1.2 g/cm$^3$, or 1.3 g/cm$^3$ approximately. In some embodiments, the density of the negative electrode active substance in the negative electrode mixture layer is less than 2.2 g/cm$^3$, 2.1 g/cm$^3$, 2.0 g/cm$^3$, or 1.9 g/cm$^3$ approximately. In some embodiments, the density of the negative electrode active substance in the negative electrode mixture layer is within a range defined by any two of the foregoing values.

When the density of the negative electrode active substance is within the foregoing range, negative electrode active substance particles can be prevented from being damaged, deterioration of the charge/discharge characteristic under high current density caused due to an increase in initial irreversible capacity of the electrochemical apparatus or a decrease in permeability of the electrolyte near an interface of the negative electrode current collector or the negative electrode active substance can be inhibited, and the reduction in the capacity and the increase in the resistance of the electrochemical apparatus can also be inhibited.

2. Negative electrode current collector

As a current collector for holding the negative electrode active substance, the negative electrode current collector may use any known current collector. Examples of the negative electrode current collector include but are not limited to metal materials such as aluminum, copper, nickel, stainless steel, and nickel plated steel. In some embodiments, the negative electrode current collector is copper.

In a case that the negative electrode current collector is a metal material, the negative electrode current collector may take forms including but not limited to a metal foil, a metal cylinder, a metal coil, a metal plate, a metal foil, a sheet metal mesh, a punched metal, and a foamed metal. In some embodiments, the negative electrode current collector is a metal film. In some embodiments, the negative electrode current collector is a copper foil. In some embodiments, the negative electrode current collector is a rolled copper foil based on a rolling method or an electrolytic copper foil based on an electrolytic method.

In some embodiments, a thickness of the negative electrode current collector is greater than 1 $\mu$m or 5 $\mu$m approximately. In some embodiments, the thickness of the negative electrode current collector is less than 100 $\mu$m or 50 $\mu$m approximately. In some embodiments, the thickness of the negative electrode current collector is within a range defined by any two of the foregoing values.

The thickness ratio of the negative electrode mixture layer to the negative electrode current collector refers to a value of dividing a thickness of a single-sided negative electrode mixture layer by the thickness of the negative electrode current collector, and a value of the thickness ratio is not particularly limited. In some embodiments, the thickness ratio is less than or equal to 50. In some embodiments, the thickness ratio is less than or equal to 30. In some embodiments, the thickness ratio is less than or equal to 20. In some embodiments, the thickness ratio is less than or equal to 10. In some embodiments, the thickness ratio is greater than or equal to 1. In some embodiments, the thickness ratio is within a range defined by any two of the foregoing values. When the thickness ratio is within the foregoing range, the capacity of the electrochemical apparatus can be ensured, and heat release of the negative electrode current collector during charging and discharging under the high current density can also be inhibited.

II. Electrolyte

The electrolyte used in the electrochemical apparatus of this application includes an electrolytic salt and a solvent for dissolving the electrolytic salt. In some embodiments, the electrolyte used in the electrochemical apparatus of this application further includes an additive.

Another main characteristic of the electrochemical apparatus in this application is that the electrolyte includes propionate.

In some embodiments, the propionate includes a compound of formula 2:

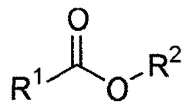 formula 2,

where $R^1$ is selected from an ethyl group or a haloethyl group; and
$R^2$ is selected from a $C_1$-$C_6$ alkyl group or a $C_1$-$C_6$ haloalkyl group.

In some embodiments, the propionate includes but is not limited to methyl propionate, ethyl propionate, propyl propionate, butyl propionate, amyl propionate, methyl halopropionate, ethyl halopropionate, propyl halopropionate, butyl halopropionate, and amyl halopropionate. In some embodiments, the propionate is selected from at least one of methyl propionate, ethyl propionate, propyl propionate, butyl propionate, or amyl propionate. In some embodiments, halogen groups in the methyl halopropionate, ethyl halopropionate, propyl halopropionate, butyl halopropionate, and amyl halopropionate are selected from one or more of a fluorine group (-F), a chlorine group (-Cl), a bromine group (-Br), and an iodine group (-I). In some embodiments, the halogen group is the fluorine group (-F) that can achieve a more excellent effect.

In some embodiments, based on the weight of the electrolyte, the percentage of the propionate is X%, and X ranges from 5 to 65. In some embodiments, X ranges from 10 to 60. In some embodiments, X ranges from 15 to 50. In some embodiments, X ranges from 20 to 40. In some embodiments, X is 5, 10, 15, 20, 25, 30, 35, 40, 45, 50, 55, 60, or 65, or is within a range defined by any two of the foregoing values. When the percentage of the propionate in the electrolyte is within the foregoing range, the high-temperature storage performance and overcharge protection performance of the electrochemical apparatus can be further improved.

In some embodiments, the percentage X% of the propionate in the electrolyte and the adhesion strength F N/$cm^2$ satisfy $1.6 \leq F/X \leq 100$. In some embodiments, $2 \leq F/X \leq 80$. In some embodiments, $3 \leq F/X \leq 70$. In some embodiments, $5 \leq F/X \leq 60$. In some embodiments, $6 \leq F/X \leq 50$. In some embodiments, F/X is 1.6, 3, 5, 7, 8, 10, 15, 20, 30, 40, 50, 60, 70, 80, 90, or 100, or is within a range defined by any two of the foregoing values. When the percentage X% of the propionate in the electrolyte and the adhesion strength F N/$cm^2$ satisfy the foregoing relationship, the high-temperature storage performance and overcharge protection performance of the electrochemical apparatus can be further improved. In some embodiments, the electrolyte further includes at least one of the following compounds:

(i) fluorocarbonate;
(ii) a compound having a cyano group;
(iii) lithium difluorophosphate; or
(iv) a compound of formula 1:

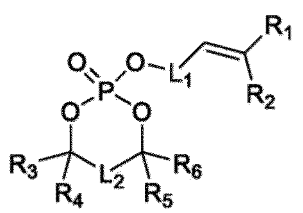 formula 1,

where $R^1$, $R^2$, $R^3$, $R^4$, $R^5$, and $R^6$ are each independently hydrogen or a $C_1$-$C_{10}$ alkyl group;
$L_1$ and $L_2$ are each independently $-(CR^7R^8)_n-$;
$R^7$ and $R^8$ are each independently hydrogen or a $C_1$-$C_{10}$ alkyl group; and
n is 1, 2, or 3.

(i) Fluorocarbonate

During charging/discharging of the electrochemical apparatus, the fluorocarbonate may act with the propionate to form a stable protective film on the surface of the negative electrode, so as to suppress decomposition reaction of the electrolyte.

In some embodiments, the fluorocarbonate has a formula $C{=}O(OR_x)(OR_y)$, where $R_x$ and $R_y$ each are selected from an alkyl group or haloalkyl group having 1 to 6 carbon atoms. At least one of $R_x$ and $R_y$ is selected from a fluoroalkyl group having 1 to 6 carbon atoms. $R_x$ and $R_y$, optionally together with the atoms to which they are attached, form a 5- to 7-membered ring.

In some embodiments, examples of the fluorocarbonate may include but are not limited to one or more of the following: fluoroethylene carbonate, cis-4,4-difluoroethylene carbonate, trans-4,4-difluoroethylene carbonate, 4,5-difluoroethylene carbonate, 4-fluoro-4-methyl ethylene carbonate, and 4-fluoro-5-methyl ethylene carbonate.

In some embodiments, based on the weight of the electrolyte, a percentage of the fluorocarbonate ranges from 0.1% to 10%. In some embodiments, based on the weight of the electrolyte, the percentage of the fluorocarbonate ranges from 0.5% to 8%. In some embodiments, based on the weight of the electrolyte, the percentage of the fluorocarbonate ranges from 1% to 5%. In some embodiments, based on the weight of the electrolyte, the percentage of the fluorocarbonate is 0.1%, 0.5%, 1%, 2%, 3%, 4%, 5%, 6%, 7%, 8%, 9%, or 10%, or is within a range defined by any two of the foregoing values.

(ii) Compound having a cyano group

In some embodiments, the compound having the cyano group includes but is not limited to one or more of the following: succinonitrile, glutaronitrile, adiponitrile, 1,5-dicyanopentane, 1,6-dicyanohexane, tetramethylsuccinonitrile, 2-methylglutaronitrile, 2,4-dimethylglutaronitrile, 2,2,4,4-tetramethylglutaronitrile, 1,4-dicyanopentane, 1,2-dicyanobenzene, 1,3-dicyanobenzene, 1,4-dicyanobenzene, ethylene glycol bis(propionitrile) ether, 3,5-dioxa-heptanedionitrile, 1,4-bis(cyanoethoxy) butane, diethylene glycol di(2-cyanoethyl) ether, triethylene glycol di(2-cyanoethyl) ether, tetraethylene glycol di(2-cyanoethyl) ether, 1,3-di(2-cyanoethoxy) propane, 1,4-di(2-cyanoethoxy) butane, 1,5-di(2-cyanoethoxy) pentane, ethylene glycol di(4-cyanobutyl) ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,3,5-pentamethylenetricarbonitrile, 1,2,3-propanetricarbonitrile, 1,3,6-hexanetricarbonitrile, 1,2,6-hexanetricarbonitrile, 1,2,3-tris(2-cyanoethoxy) propane, 1,2,4-tris(2-cyanoethoxy) butane, 1,1,1-tris(cyanoethoxymethylene) ethane, 1,1,1-tris(cyanoethoxymethylene) propane, 3-methyl-1,3,5-tris(cyanoethoxy) pentane, 1,2,7-tris(cyanoethoxy) heptane, 1,2,6-tris(cyanoethoxy) hexane, and 1,2,5-tris(cyanoethoxy) pentane.

The foregoing compound having the cyano group may be used alone or in any combination. If the electrolyte contains two or more compounds having the cyano group, the percentage of the compounds having the cyano group is the total percentage of the two or more compounds having the cyano group.

In some embodiments, based on the weight of the electrolyte, a percentage of the compound having the cyano group is b%, and b ranges from 0.01 to 10. In some embodiments, b ranges from 0.05 to 8. In some embodiments, b ranges from 0.1 to 5. In some embodiments, b ranges from 0.5 to 3. In some embodiments, b ranges from 1 to 2. In some embodiments, b is 0.01, 0.05, 0.1, 0.5, 1, 2, 5, 8, or 10, or is within a range defined by any two of the foregoing values. When the percentage of the compound having the cyano group in the electrolyte is within the foregoing range, the high-temperature storage performance and overcharge protection performance of the electrochemical apparatus can be further improved.

In some embodiments, the percentage X% of the propionate and the percentage b% of the compound having the cyano group in the electrolyte satisfy $0.5 \leq X/b \leq 200$. In some embodiments, $1 \leq X/b \leq 150$. In some embodiments, $5 \leq X/b \leq 100$. In some embodiments, $10 \leq X/b \leq 80$. In some embodiments, $30 \leq X/b \leq 50$. In some embodiments, X/b is 0.5, 1, 5, 10, 20, 50, 80, 100, 120, 150, 180, or 200, or is within a range defined by any two of the foregoing values. When the percentage X% of the propionate and the percentage b% of the compound having the cyano group in the electrolyte satisfy the foregoing relationship, the high-temperature storage performance and overcharge protection performance of the electrochemical apparatus can be further improved.

(iii) Lithium difluorophosphate ($LiPO_2F_2$)

In some embodiments, based on the weight of the electrolyte, a percentage of the lithium difluorophosphate ranges from 0.01% to 1.5%. In some embodiments, based on the weight of the electrolyte, the percentage of the lithium difluorophosphate ranges from 0.05% to 1.2%. In some embodiments, based on the weight of the electrolyte, the percentage of the lithium difluorophosphate ranges from 0.1% to 1.0%. In some embodiments, based on the weight of the electrolyte, the percentage of the lithium difluorophosphate ranges from 0.5% to 0.8%. In some embodiments, based

on the weight of the electrolyte, the percentage of lithium difluorophosphate is 0.01%, 0.05%, 0.1%, 0.15%, 0.2%, 0.25%, 0.3%, 0.35%, 0.4%, 0.45%, 0.5%, 0.8%, 1%, or 1.5%, or is within a range defined by any two of the foregoing values.

(iv) Compound of formula 1

In some embodiments, the compound of formula 1 includes at least one of the following compounds:

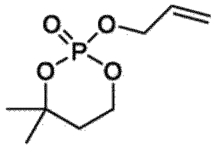 formula 1-1, 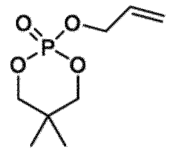 formula 1-2,

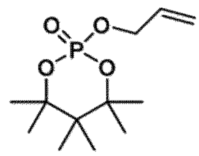 formula 1-3,

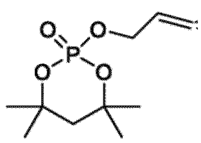 formula 1-4, 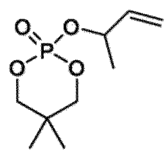 formula 1-5, or

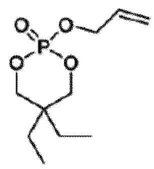 formula 1-6.

In some embodiments, based on the weight of the electrolyte, a percentage of the compound of formula 1 ranges from 0.01% to 5%. In some embodiments, based on the weight of the electrolyte, the percentage of the compound of formula 1 ranges from 0.05% to 4%. In some embodiments, based on the weight of the electrolyte, the percentage of the compound of formula 1 ranges from 0.1% to 3%. In some embodiments, based on the weight of the electrolyte, the percentage of the compound of formula 1 ranges from 0.5% to 2%. In some embodiments, based on the weight of the electrolyte, the percentage of the compound of formula 1 ranges from 1% to 1.5%. In some embodiments, based on the weight of the electrolyte, the percentage of the compound of formula 1 is 0.01%, 0.05%, 0.1%, 0.5%, 1%, 2%, 3%, 4%, or 5%, or is within a range defined by any two of the foregoing values. When the percentage of the compound of formula 1 in the electrolyte is within the foregoing range, the high-temperature storage performance and overcharge protection performance of the electrochemical apparatus can be further improved.

Solvent

In some embodiments, the electrolyte further contains any non-aqueous solvent that is known in the art and that may be used as a solvent for the electrolyte.

In some embodiments, the non-aqueous solvent includes but is not limited to one or more of the following: cyclic carbonate, linear carbonate, cyclic carboxylate, linear carboxylate, cyclic ether, linear ether, a phosphorus-containing organic solvent, a sulfur-containing organic solvent, and an aromatic fluorine-containing solvent.

In some embodiments, examples of the cyclic carbonate may include but are not limited to one or more of the following: ethylene carbonate (EC), propylene carbonate (PC), and butylene carbonate. In some embodiments, the cyclic carbonate has 3 to 6 carbon atoms.

In some embodiments, examples of the linear carbonate may include but are not limited to one or more of the following: dimethyl carbonate, ethyl methyl carbonate, diethyl carbonate (DEC), methyl n-propyl carbonate, ethyl n-propyl carbonate, and dipropyl carbonate. Examples of the linear carbonate substituted with fluorine may include but are not limited to one or more of the following: bis(fluoromethyl) carbonate, bis(difluoromethyl) carbonate, bis (trifluoromethyl) carbonate, bis(2-fluoroethyl) carbonate, bis (2,2-difluoroethyl) carbonate, bis(2,2,2-trifluoroethyl) carbonate, 2-fluoroethyl methyl carbonate, 2,2-difluoroethyl methyl carbonate, and 2,2,2-trifluoroethyl methyl carbonate.

In some embodiments, examples of the cyclic carboxylate may include but are not limited to one or more of the following: γ-butyrolactone and γ-valerolactone. In some embodiments, some hydrogen atoms in the cyclic carboxylate may be substituted with fluorine.

In some embodiments, examples of the linear carboxylates may include but are not limited to one or more of the following: methyl acetate, ethyl acetate, propyl acetate, isopropyl acetate, butyl acetate, sec-butyl acetate, isobutyl acetate, tert-butyl acetate, methyl propionate, ethyl propionate, propyl propionate, isopropyl propionate, methyl butyrate, ethyl butyrate, propyl butyrate, methyl isobutyrate, ethyl isobutyrate, methyl valerate, ethyl valerate, methyl pivalate, and ethyl pivalate. In some embodiments, some hydrogen atoms in the chain carboxylate may be substituted with fluorine. In some embodiments, examples of the fluorine-substituted linear carboxylate may include but are not limited to methyl trifluoroacetate, ethyl trifluoroacetate, propyl trifluoroacetate, butyl trifluoroacetate, and 2,2,2-trifluoroethyl trifluoroacetate.

In some embodiments, examples of the cyclic ether may include but are not limited to one or more of the following: tetrahydrofuran, 2-methyltetrahydrofuran, 1,3-dioxolane, 2-methyl 1,3-dioxolane, 4-methyl 1,3-dioxolane, 1,3-dioxane, 1,4-dioxane, and dimethoxypropane.

In some embodiments, examples of the linear ether may include but are not limited to one or more of the following: dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxyethane, and 1,2-ethoxymethoxyethane.

In some embodiments, examples of the phosphorus-containing organic solvent may include but are not limited to one or more of the following: trimethyl phosphate, triethyl phosphate, dimethyl ethyl phosphate, methyl diethyl phosphate, ethylene methyl phosphate, ethylene ethyl phosphate, triphenyl phosphate, trimethyl phosphite, triethyl phosphite, triphenyl phosphite, tris(2,2,2-trifluoroethyl) phosphate, and tris(2,2,3,3,3-pentafluoropropyl) phosphate.

In some embodiments, examples of the sulfur-containing organic solvent may include but are not limited to one or more of the following: sulfolane, 2-methylsulfolane, 3-methylsulfolane, dimethyl sulfone, diethyl sulfone, ethyl methyl sulfone, methyl propyl sulfone, dimethyl sulfoxide, methyl methanesulfonate, ethyl methanesulfonate, methyl ethanesulfonate, ethyl ethanesulfonate, dimethyl sulfate, diethyl sulfate, and dibutyl sulfate. In some embodiments, some hydrogen atoms in the organic solvent containing sulfur may be substituted with fluorine.

In some embodiments, the aromatic fluorine-containing solvent includes but is not limited to one or more of the following: fluorobenzene, difluorobenzene, trifluorobenzene, tetrafluorobenzene, pentafluorobenzene, hexafluorobenzene, and trifluoromethylbenzene.

In some embodiments, the solvent used in the electrolyte in this application includes cyclic carbonate, chain carbonate, cyclic carboxylate, chain carboxylate, and a combination thereof. In some embodiments, solvents used in the electrolyte in this application include a group of organic solvents selected from the following substances: ethylene carbonate, propylene carbonate, diethyl carbonate, ethyl propionate, propyl propionate, n-propyl acetate, ethyl acetate, and a combination thereof. In some embodiments, the solvent used in the electrolyte in this application includes ethylene carbonate, propylene carbonate, diethyl carbonate, ethyl propionate, propyl propionate, γ-butyrolactone, and a combination thereof.

Additive

In some embodiments, examples of the additive may include but are not limited to one or more of the following: fluorocarbonate, carbon-carbon double bond-containing ethylene carbonate, sulfur-oxygen double bond-containing compound, and anhydride.

In some embodiments, based on the weight of the electrolyte, a percentage of the additive is 0.01% to 15%, 0.1% to 10%, or 1% to 5%.

According to an embodiment of this application, based on the weight of the electrolyte, a percentage of the propionate is 1.5 to 30 times, 1.5 to 20 times, 2 to 20 times, or 5 to 20 times the percentage of the additive.

In some embodiments, the additive includes one or more carbon-carbon double bond-containing ethylene carbonates. Examples of the carbon-carbon double bond-containing ethylene carbonate may include but are not limited to one or more of the following: vinylidene carbonate, methylvinylidene carbonate, ethylvinylidene carbonate, 1,2-dimethylvinylidene carbonate, 1,2-diethylvinylidene carbonate, fluorovinylidene carbonate, trifluoromethylvinylidene carbonate; vinylethylene carbonate, 1-methyl-2-vinylethylene carbonate, 1-ethyl-2-vinylethylene carbonate, 1-n-propyl-2-vinylethylene carbonate, 1-methyl-2-vinylethylene carbonate, 1,1-divinylethylene carbonate, 1,2-divinylethylene carbonate, 1,1-dimethyl-2-methylene ethylene carbonate, and 1,1-diethyl-2-methylene ethylene carbonate. In some embodiments, the carbon-carbon double bond containing ethylene carbonate includes vinylidene carbonate, and can easily achieve better

effects.

In some embodiments, the additive is a combination of fluorocarbonate and carbon-carbon double bond containing ethylene carbonate. In some embodiments, the additive is a combination of fluorocarbonate and the sulfur-oxygen double bond-containing compound. In some embodiments, the additive is a combination of fluorocarbonate and a compound having 2 to 4 cyano groups. In some embodiments, the additive is a combination of fluorocarbonate and cyclic carboxylate. In some embodiments, the additive is a combination of fluorocarbonate and cyclic phosphoric anhydride. In some embodiments, the additive is a combination of fluorocarbonate and phosphoric anhydride. In some embodiments, the additive is a combination of fluorocarbonate and sulfonic anhydride. In some embodiments, the additive is a combination of fluorocarbonate and carboxylic acid sulfonic anhydride.

Electrolytic salt

The electrolytic salt is not particularly limited. Any substances commonly known as electrolytic salts can be used. For lithium secondary batteries, lithium salts are typically used. Examples of the electrolytic salts may include but are not limited to inorganic lithium salts such as $LiPF_6$, $LiBF_4$, $LiClO_4$, $LiAlF_4$, $LiSbF_6$, and $LiWF_7$; lithium tungstates such as LiWOFs; lithium carboxylate salts such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, and $CF_3CF_2CF_2CF_2CO_2Li$; lithium sulfonates salts such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$, and $CF_3CF_2CF_2CF_2SO_3Li$; lithium imide salts such as $LiN(FCO)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, and $LiN(CF_3SO_2)(C_4F_9SO_2)$; lithium methide salts such as $LiC(FSO_2)_3$, $LiC(CF_3SO_2)_3$, and $LiC(C_2F_5SO_2)_3$; lithium (malonate) borate salts such as lithium bis(malonate) borate and lithium difluoro(malonate) borate; lithium (malonato)phosphate salts such as lithium tris(malonato)phosphate, lithium difluorobis(malonato)phosphate, and lithium tetrafluoro(malonato)phosphate; fluorine-containing organolithium salts such as $LiPF_4(CF_3)_2$, $LiPF_4(C_2F_5)_2$, $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)_2$, $LiBF_2(C_2F_5)_2$, $LiBF_2(CF_3SO_2)_2$, and $LiBF_2(C_2F_5SO_2)_2$; lithium oxalatoborate salts such as lithium difluorooxalatoborate and lithium bis(oxalato)borate; and lithium oxalatophosphate salts such as lithium tetrafluorooxalatophosphate, lithium difluorobis(oxalato)phosphate, and lithium tris(oxalato)phosphate.

In some embodiments, the electrolytic salt is selected from $LiPF_6$, $LiSbF_6$, $FSO_3Li$, $CF_3SO_3Li$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, $LiPF_3(C_2F_5)_3$, lithium difluorooxalatoborate, lithium bis(oxalato)borate, or lithium difluorobis(oxalato)phosphate, which helps improve characteristics of the electrochemical apparatus such as output power, high-rate charge/discharge, high-temperature storage, and cycling characteristics.

The concentration of the electrolytic salt is not particularly limited, provided that the effects of this application are not impaired. In some embodiments, the total molar concentration of lithium in the electrolyte is greater than 0.3 mol/L, 0.4 mol/L, or 0.5 mol/L. In some embodiments, the total molar concentration of lithium in the electrolyte is less than 3 mol/L, 2.5 mol/L, or 2.0 mol/L. In some embodiments, the total molar concentration of lithium in the electrolyte is within a range defined by any two of the foregoing values. When the concentration of the electrolyte is within the foregoing range, the amount of lithium as charged particles would not be excessively small, and the viscosity can be controlled within an appropriate range, thereby ensuring good conductivity.

When two or more electrolytic salts are used, the electrolytic salts include at least one salt selected from a group consisting of monofluorophosphate, borate, oxalate, and fluorosulfonate. In some embodiments, the electrolytic salt includes a salt selected from a group consisting of monofluorophosphate, oxalate, and fluorosulfonate. In some embodiments, the electrolytic salt includes a lithium salt. In some embodiments, based on weight of the electrolytic salts, a percentage of the salt selected from the group consisting of monofluorophosphate, borate, oxalate, and fluorosulfonate is greater than 0.01% or 0.1%. In some embodiments, based on the weight of the electrolytic salts, the percentage of the salt selected from the group consisting of monofluorophosphate, borate, oxalate, and fluorosulfonate is less than 20% or 10%. In some embodiments, the percentage of the salt selected from the group consisting of monofluorophosphate, borate, oxalate, and fluorosulfonate is within a range defined by any two of the foregoing values.

In some embodiments, the electrolytic salt includes more than one substance selected from the group consisting of monofluorophosphate, borate, oxalate, and fluorosulfonate, and more than one other salt different from the more than one substance. Examples of the other salt different from the salts in the group include lithium salts exemplified above, and in some embodiments, are $LiPF_6$, $LiN(FSO_2)(CF_3SO_2)$, $LiN(CF_3SO_2)_2$, $LiN(C_2F_5SO_2)_2$, lithium cyclic 1,2-perfluoroethane disulfonimide, lithium cyclic 1,3-perfluoropropane disulfonimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$ and $LiPF_3(C_2F_5)_3$. In some embodiments, the other salt is $LiPF_6$.

In some embodiments, based on the weight of the electrolytic salts, a percentage of the other salt is greater than 0.01% or 0.1%. In some embodiments, based on the weight of the electrolytic salts, the percentage of the other salt is less than 20%, 15%, or 10%. In some embodiments, the percentage of the other salts is within a range defined

by any two of the foregoing values. The other salt having the foregoing percentage helps balance the conductivity and viscosity of the electrolyte.

In the electrolyte, in addition to the foregoing solvent, additive, and electrolytic salt, additional additives such as a negative electrode film forming agent, a positive electrode protection agent, and an overcharge prevention agent may be included as necessary. For the additive, an additive typically used in non-aqueous electrolyte secondary batteries may be used, and examples thereof may include but are not limited to vinylidene carbonate, succinic anhydride, biphenyls, cyclohexylbenzene, 2,4-difluoroanisole, propane sulfonate, and propylene sulfonate. These additives may be used alone or in any combination. In addition, a percentage of these additives in the electrolyte is not particularly limited and may be set as appropriate to the types of the additives and the like. In some embodiments, based on weight of the electrolytic salts, a percentage of the additive is less than 5%, or ranges from 0.01% to 5% or from 0.2% to 5%.

## III. Positive electrode

The positive electrode includes a positive electrode current collector and a positive electrode active substance layer disposed on one or both surfaces of the positive electrode current collector.

### 1. Positive electrode active substance layer

The positive electrode active substance layer contains a positive electrode active substance. There may be one or more positive electrode active substance layers. Each of the plurality of layers of the positive electrode active substance may contain the same or different positive electrode active substances. The positive electrode active substance is any substance capable of reversibly intercalating and deintercalating metal ions such as lithium ions.

The positive electrode active substance is not particularly limited in type, provided that metal ions (for example, lithium ions) can be electrochemically absorbed and released. In some embodiments, the positive electrode active substance is a substance that contains lithium and at least one transition metal. Examples of the positive electrode active substance may include but are not limited to lithium transition metal composite oxides and lithium-containing transition metal phosphate compounds.

In some embodiments, transition metals in the lithium transition metal composite oxide include V, Ti, Cr, Mn, Fe, Co, Ni, Cu, and the like. In some embodiments, the lithium transition metal composite oxide includes a lithium cobalt composite oxide such as $LiCoO_2$, a lithium nickel composite oxide such as $LiNiO_2$, a lithium manganese composite oxide such as $LiMnO_2$, $LiMn_2O_4$, or $Li_2MnO_4$, or a lithium nickel manganese cobalt composite oxide such as $LiNi_{1/3}Mn_{1/3}Co_{1/3}O_2$ or $LiNi_{0.5}Mn_{0.3}Co_{0.2}O_2$, where some of transition metal atoms as a main body of these lithium transition metal composite oxides are substituted by Na, K, B, F, Al, Ti, V, Cr, Mn, Fe, Co, Li, Ni, Cu, Zn, Mg, Ga, Zr, Si, Nb, Mo, Sn, W, and the like. Examples of the lithium transition metal composite oxide may include but are not limited to $LiNi_{0.5}Mn_{0.5}O_2$, $LiNi_{0.85}Co_{0.10}Al_{0.05}O_2$, $LiNi_{0.33}Co_{0.33}Mn_{0.33}O_2$, $LiNi_{0.45}Co_{0.10}Al_{0.45}O_2$, $LiMn_{1.8}Al_{0.2}O_4$, and $LiMn_{1.5}Ni_{0.5}O_4$. An example of a combination of the lithium transition metal composite oxides includes but is not limited to a combination of $LiCoO_2$ and $LiMn_2O_4$, where a part of Mn in $LiMn_2O_4$ can be substituted by transition metal (for example, $LiNi_{0.33}Co_{0.33}Mn_{0.33}O_2$), and a part of Co in $LiCoO_2$ can be substituted by transition metal.

In some embodiments, transition metals in the lithium-containing transition metal phosphate compound include V, Ti, Cr, Mn, Fe, Co, Ni, Cu, or the like. In some embodiments, the lithium-containing transition metal phosphate compound includes iron phosphate such as $LiFePO_4$, $Li_3Fe_2(PO_4)_3$, or $LiFeP_2O_7$, or cobalt phosphate such as $LiCoPO_4$, where some of transition metal atoms as a main body of these lithium transition metal phosphate compounds are substituted by Al, Ti, V, Cr, Mn, Fe, Co, Li, Ni, Cu, Zn, Mg, Ga, Zr, Nb, Si and the like.

In some embodiments, the positive electrode active substance includes lithium phosphate, which can improve a continuous charging characteristic of the electrochemical apparatus. Use of lithium phosphate is not limited. In some embodiments, the positive electrode active substance and lithium phosphate are used in combination. In some embodiments, the percentage of the lithium phosphate is greater than 0.1%, 0.3%, or 0.5%, relative to the weight of the foregoing positive electrode active substance and the lithium phosphate. In some embodiments, the percentage of the lithium phosphate is less than 10%, 8%, or 5%, relative to the weight of the foregoing positive electrode active substance and the lithium phosphate. In some embodiments, the percentage of the lithium phosphate is within a range defined by any two of the foregoing values.

### Surface coating

A substance with a composition different from that of the positive electrode active substance may be attached to a surface of the positive electrode active substance. Examples of the surface-attached substance may include but are not limited to oxides such as aluminum oxide, silicon dioxide, titanium dioxide, zirconium oxide, magnesium oxide, calcium oxide, boron oxide, antimony oxide, and bismuth oxide; sulfates such as lithium sulfate, sodium sulfate, potassium

sulfate, magnesium sulfate, calcium sulfate, and aluminum sulfate; carbonates such as lithium carbonate, calcium carbonate, and magnesium carbonate; and carbon.

These surface-attached substances may be attached to a surface of the positive electrode active substance in the following method: a method for dissolving or suspending the surface-attached substance in a solvent to infiltrate into the positive electrode active substance, and then performing drying; a method for dissolving or suspending a precursor of the surface-attached substance in a solvent to infiltrate into the positive electrode active substance, and then performing heating or the like to implement reaction of the surface-attached substance; a method for adding the surface-attached substance to a precursor of the positive electrode active substance while performing sintering; and the like. When carbon is attached, a method of mechanically attaching a carbon material (for example, activated carbon) may be further used.

In some embodiments, based on the weight of the positive electrode active substance layer, a percentage of the surface-attached substance is greater than 0.1 ppm, 1 ppm, or 10 ppm. In some embodiments, based on the weight of the positive electrode active substance layer, the percentage of the surface-attached substance is lower than 10%, 5%, or 2%. In some embodiments, based on the weight of the positive electrode active substance layer, the percentage of the surface-attached substance is within a range defined by any two of the foregoing values.

Attaching the substance to the surface of the positive electrode active substance can inhibit oxidation reaction of an electrolyte on the surface of the positive electrode active substance, which can prolong service life of the electrochemical apparatus. When there is an excessively small amount of surface-attached substance, its effect cannot be fully exerted; or when there is an excessively great amount of surface-attached substance, entry or exit of lithium ions may be hindered, and the resistance may be increased.

In this application, a positive electrode active substance whose surface is attached with a substance having a composition different from the positive electrode active substance is also referred to as a "positive electrode active substance".

Shape

In some embodiments, shapes of positive electrode active substance particles include but are not limited to a block, a polyhedron, a sphere, an ellipsoid, a plate, a needle, and a pillar. In some embodiments, the positive electrode active substance particles include primary particles, secondary particles, or a combination thereof. In some embodiments, the primary particles may agglomerate to form the secondary particles.

Tap density

In some embodiments, tap density of the positive electrode active substance is greater than 0.5 g/cm$^3$, 0.8 g/cm$^3$, or 1.0 g/cm$^3$. When the tap density of the positive electrode active substance is within the foregoing range, required amounts of dispersion medium, a conductive material, and a positive electrode binder can be inhibited when the positive electrode active substance layer is formed, thereby ensuring a filling rate of the positive electrode active substance and capacity of the electrochemical apparatus. A positive electrode active substance layer with great density can be formed by using composite oxide powder with great tap density. Greater tap density is preferable and there is no particular upper limit for the tap density. In some embodiments, the tap density of the positive electrode active substance is less than 4.0 g/cm$^3$, 3.7 g/cm$^3$, or 3.5 g/cm$^3$. When the tap density of the positive electrode active substance has the foregoing upper limit, a decrease in a load characteristic can be inhibited.

The tap density of the positive electrode active substance can be calculated in the following method: 5 g to 10 g of positive electrode active substance powder is added into a 10 mL glass measuring cylinder, and subjected to 200 vibrations at stroke length of 20 mm to obtain powder filling density (tap density).

Median particle size (D50)

When the positive electrode active substance particles are primary particles, the median particle size (D50) of the positive electrode active substance particles is a primary particle size of the positive electrode active substance particles. When the primary particles of the positive electrode active substance particles agglomerate to form secondary particles, the median particle size (D50) of the positive electrode active substance particles is a secondary particle size of the positive electrode active substance particles.

In some embodiments, the median particle size (D50) of the positive electrode active substance particles is greater than 0.3 μm, greater than 0.5 μm, greater than 0.8 μm, or greater than 1.0 μm. In some embodiments, the median particle size (D50) of the positive electrode active substance particles is less than 30 μm, 27 μm, 25 μm, or 22 μm. In some embodiments, the median particle size (D50) of the positive electrode active substance particles is within a range defined by any two of the foregoing values. When the median particle size (D50) of the positive electrode active substance particles is within the foregoing range, the positive electrode active substance with high tap density can be

obtained, which can inhibit a decrease in the performance of the electrochemical apparatus. In addition, in a process of preparing the positive electrode of the electrochemical apparatus (that is, when the positive electrode active substance, the conductive material, the binder, and the like are made into a slurry with a solvent and the slurry is applied in a thin-film form), a problem such as stripes can be prevented. Herein, mixing two or more positive electrode active substances having different median particle sizes can further improve filling performance during preparation of the positive electrode.

The median particle size (D50) of the positive electrode active substance particles can be measured by using a laser diffraction/scattering particle size distribution analyzer: When LA-920 manufactured by HORIBA is used as the particle size distribution analyzer, a 0.1% sodium hexametaphosphate aqueous solution is used as a dispersion medium used in during measurement, and after 5 minutes of ultrasonic dispersion, a measurement refractive index is set to 1.24 to perform measurement.

Average primary particle size

When the primary particles of the positive electrode active substance particles agglomerate to form the secondary particles, in some embodiments, the average primary particle size of the positive electrode active substance is greater than 0.05 μm, greater than 0.1 μm, or greater than 0.5 μm. In some embodiments, the average primary particle size of the positive electrode active substance is less than 5 μm, less than 4 μm, less than 3 μm, or less than 2 μm. In some embodiments, the average primary particle size of the positive electrode active substance is within a range between any two of the foregoing values. When the average primary particle size of the positive electrode active substance is within the foregoing range, the powder filling property and the specific surface area can be ensured, performance degradation of the battery can be suppressed, and moderate crystallinity can be implemented, thereby ensuring reversibility of charging and discharging of the electrochemical apparatus.

The average primary particle size of the positive electrode active substance may be obtained by observing an image from a scanning electron microscope (SEM): in the SEM image magnified 10000 times, for any 50 primary particles, obtaining longest values of slices obtained on the left and right boundary lines of the primary particles relative to the horizontal straight line, and calculating an average value to obtain the average primary particle size.

Specific surface area (BET)

In some embodiments, a specific surface area (BET) of the positive electrode active substance is greater than 0.1 $m^2/g$, 0.2 $m^2/g$, or 0.3 $m^2/g$. In some embodiments, a specific surface area (BET) of the positive electrode active substance is less than 50 $m^2/g$, 40 $m^2/g$, or 30 $m^2/g$. In some embodiments, the specific surface area (BET) of the positive electrode active substance is within a range defined by any two of the foregoing values. When the specific surface area (BET) of the positive electrode active substance is within the foregoing range, the performance of the electrochemical apparatus can be ensured, and the positive electrode active substance can also have good coating performance.

The specific surface area (BET) of the positive electrode active substance can be measured in the following method: being measured using a surface area meter (the full-automatic surface area measuring apparatus manufactured by Ohkura Riken Co., Ltd.) according to single point BET nitrogen adsorption using the dynamic flow method by predrying a sample for 30 minutes at 150°C in the presence of flowing nitrogen followed by using a nitrogen-helium mixed gas whose value of the relative pressure of nitrogen to atmospheric pressure is accurately adjusted to 0.3.

Positive electrode conductive material

The positive electrode conductive material is not limited in type, and any known conductive material can be used. Examples of the positive electrode conductive material may include but are not limited to graphite such as natural graphite and artificial graphite; carbon black such as acetylene black; a carbon material such as amorphous carbon, for example, needle coke; carbon nanotubes; and graphene. The foregoing positive electrode conductive material can be used alone or in any combination.

In some embodiments, based on the weight of the positive electrode active substance layer, a percentage of the positive electrode conductive material is higher than 0.01%, 0.1%, or 1%. In some embodiments, based on the weight of the positive electrode active substance layer, the percentage of the positive electrode conductive material is lower than 10%, 8%, or 5%. When the percentage of the positive electrode conductive material is within the foregoing range, sufficient conductivity and capacity of the electrochemical apparatus can be ensured.

Positive electrode binder

The positive electrode binder used in production of the positive electrode active substance layer is not particularly

limited in type, and a material that can be dissolved or dispersed in a liquid medium used in production of an electrode in a coating method may be used. Examples of the positive electrode binder may include but are not limited to one or more of the following: a resin polymer such as polyethylene, polypropylene, polyethylene glycol terephthalate, polymethyl methacrylate, polyimide, aromatic polyamide, cellulose, or nitrocellulose; a rubbery polymer such as styrene-butadiene rubber (SBR), acrylonitrile-butadiene rubber (NBR), fluorine rubber, isoprene rubber, polymerized styrene butadiene rubber, or ethylene propylene rubber; a styrene-butadiene-styrene block copolymer or its hydrogenated product; a thermoplastic elastomer polymer such as ethylene-propylene-diene terpolymer

(EPDM), a styrene-ethylene-butadiene-ethylene copolymer, a styrene-isoprene-styrene block copolymer or its hydrogenated product; a soft resinous polymer such as syndiotactic-1,2-polybutadiene, polyvinyl acetate, an ethylene-vinyl acetate copolymer, or a propylene-$\alpha$-olefin copolymer; a fluorine polymer such as polyvinylidene fluoride (PVDF), polytetrafluoroethylene, fluorinated polyvinylidene fluoride, or a polytetrafluoroethylene-ethylene copolymer; and a polymer composition having ion conductivity of alkaline metal ions (especially, lithium ions). The foregoing positive electrode binder may be used alone or in any combination.

In some embodiments, based on the weight of the positive electrode active substance layer, a percentage of the positive electrode binder is higher than 0.1%, 1%, or 1.5%. In some embodiments, based on the weight of the positive electrode active substance layer, the percentage of the positive electrode binder is lower than 10%, 5%, 4%, or 3%. When the percentage of the positive electrode binder is within the foregoing range, the positive electrode can have good electrical conductivity and sufficient mechanical strength, and the capacity of the electrochemical apparatus can be ensured.

Solvent

The solvent for forming the positive electrode slurry is not limited in type, provided that the solvent can dissolve or disperse the positive electrode active substance, a conductive material, the positive electrode binder, and a thickener used as needed. An example of the solvent for forming the negative electrode slurry may include either of an aqueous solvent and an organic solvent. Examples of the aqueous medium may include but are not limited to water and a mixed medium of alcohol and water. Examples of the organic medium may include but are not limited to aliphatic hydrocarbons such as hexane; aromatic hydrocarbons such as benzene, toluene, xylene, and methylnaphthalene; heterocyclic compounds such as quinoline and pyridine; ketones such as acetone, methyl ethyl ketone, and cyclohexanone; esters such as methyl acetate and methyl acrylate; amines such as diethylenetriamine, and N,N-dimethylaminopropylamine; ethers such as diethyl ether, propylene oxide, and tetrahydrofuran (THF); amides such as N-methylpyrrolidone (NMP), dimethylformamide, and dimethylacetamide; aprotic polar solvents such as hexamethylphosphoramide and dimethyl sulfoxide; and so on.

Thickener

The thickener is usually configured to adjust viscosity of the slurry. When the aqueous medium is used, a thickener and a styrene-butadiene rubber (SBR) emulsion can be used for making a slurry. The thickener is not particularly limited in type, and examples of the thickener may include but are not limited to carboxymethyl cellulose, methyl cellulose, hydroxymethyl cellulose, ethyl cellulose, polyvinyl alcohol, oxidized starch, phosphorylated starch, casein, and salt thereof. The foregoing thickener may be used alone or in any combination.

In some embodiments, based on a weight of the positive electrode active substance layer, a percentage of the thickener is greater than 0.1%, 0.2%, or 0.3%. In some embodiments, based on the weight of the positive electrode active substance layer, the percentage of the thickener is lower than 5%, 3%, or 2%. In some embodiments, based on the weight of the positive electrode active substance layer, the percentage of the thickener is within a range defined by any two of the foregoing values. When the percentage of the thickener is within the foregoing range, the positive electrode slurry can have good coating performance, and the reduction in the capacity and the increase in the resistance of the electrochemical apparatus can also be inhibited.

Percentage of positive electrode active substance

In some embodiments, based on the weight of the positive electrode active substance layer, the percentage of the positive electrode active substance is higher than 80%, 82%, or 84%. In some embodiments, based on the weight of the positive electrode active substance layer, the percentage of the positive electrode active substance is lower than 99% or 98%. In some embodiments, based on the weight of the positive electrode active substance layer, the percentage of the positive electrode active substance is within a range defined by any two of the foregoing values. When the percentage of the positive electrode active substance is within the foregoing range, the capacity of the positive electrode active substance in the positive electrode active substance layer can be ensured, and the strength of the positive electrode

can also be maintained.

Density of positive electrode active substance layer

The positive electrode active substance layer obtained by coating and drying may be compacted via manual press, roll press, or the like to increase filling density of the positive electrode active substance. In some embodiments, density of the positive electrode active substance layer is greater than 1.5 g/cm$^3$, 2 g/cm$^3$, or 2.2 g/cm$^3$. In some embodiments, the density of the positive electrode active substance layer is less than 5 g/cm$^3$, 4.5 g/cm$^3$, or 4 g/cm$^3$. In some embodiments, the density of the positive electrode active substance layer is within a range defined by any two of the foregoing values. When the density of the positive electrode active substance layer is within the foregoing range, the electrochemical apparatus can have good charging and discharging performance, and the increase in the resistance can also be inhibited.

Thickness of positive electrode active substance layer

The thickness of the positive electrode active substance layer refers to a thickness of the positive electrode active substance layer on either side of a positive electrode current collector. In some embodiments, the thickness of the positive electrode active substance layer is greater 10 $\mu$m or 20 $\mu$m. In some embodiments, the thickness of the positive electrode active substance layer is less than 500 $\mu$m or 450 $\mu$m.

Method for manufacturing a positive electrode active substance

The positive electrode active substance can be manufactured in a common method for manufacturing an inorganic compound. In order to manufacture a spherical or an ellipsoidal positive electrode active substance, the following manufacturing method can be used: A raw material of the transition metal is dissolved or pulverized in a solvent such as water, pH is adjusted while stirring a resulting mixture, a spherical precursor is prepared and reclaimed, and dried as needed, and then a Li source such as LiOH, $Li_2CO_3$, or $LiNO_3$ is added and sintered at high temperature, to obtain the positive electrode active substance.

2. Positive electrode current collector

The positive electrode current collector is not particularly limited to any type and may be any material known as being applicable to serve as a positive electrode current collector. Examples of the positive electrode current collector may include but are not limited to metal materials such as aluminum, stainless steel, a nickel-plated layer, titanium, and tantalum, and carbon materials such as carbon cloth and carbon paper. In some embodiments, the positive electrode current collector is a metal material. In some embodiments, the positive electrode current collector is aluminum.

The form of the positive electrode current collector is not particularly limited. When the positive electrode current collector is a metal material, the positive electrode current collector may take forms including but not limited to a metal foil, a metal cylinder, a metal coil, a metal plate, metal foil, a sheet metal mesh, a punched metal, and a foamed metal. When the positive electrode current collector is a carbon material, the positive electrode current collector may take forms including but not limited to a carbon plate, a carbon film, and a carbon cylinder. In some embodiments, the positive electrode current collector is metal foil. In some embodiments, the metal foil is a mesh. A thickness of the metal foil is not particularly limited. In some embodiments, the thickness of the metal foil is greater than 1 $\mu$m, 3 $\mu$m, or 5 $\mu$m. In some embodiments, the thickness of the metal foil is less than 1 mm, 100 $\mu$m, or 50 $\mu$m. In some embodiments, the thickness of the metal foil is within a range defined by any two of the foregoing values.

In order to reduce the electronic contact resistance of the positive electrode current collector and the positive electrode active substance layer, a conductive agent may be included in the surface of the positive electrode current collector. Examples of the conductive agent may include but are not limited to carbon and precious metals such as gold, platinum, and silver.

A thickness ratio of the positive electrode active substance layer to the positive electrode current collector refers to a quotient of dividing a thickness of a single-sided positive electrode active substance layer by the thickness of the positive electrode current collector, and a value of the thickness ratio is not particularly limited. In some embodiments, the thickness ratio is less than 50, 30, or 20. In some embodiments, the thickness ratio is greater than 0.5, 0.8, or 1. In some embodiments, the thickness ratio is within a range defined by any two of the foregoing values. When the thickness ratio is within the foregoing range, heat release of the positive electrode current collector during charging and discharging under the high current density can be inhibited, and the capacity of the electrochemical apparatus can be ensured.

3. Method for preparing positive electrode

The positive electrode can be prepared by forming a positive electrode active substance layer including a positive electrode active substance and a binder on a current collector. A positive electrode using the positive electrode active substance can be manufactured in a conventional method: The positive electrode active substance, the binder, and a conductive material, a thickener, and the like as required are dry mixed to form a sheet, and the obtained sheet is pressed onto the positive electrode current collector, or these materials are dissolved or dispersed in a liquid medium to form a slurry, and the slurry is applied on the positive electrode current collector and dried, to form the positive electrode active substance layer on the current collector, thereby obtaining the positive electrode.

IV. Separator

In order to prevent short circuit, a separator is typically provided between the positive electrode and the negative electrode. In this case, the electrolyte of this application typically permeates the separator for use.

The material and shape of the separator are not particularly limited, provided that the separator does not significantly impair the effects of this application. The separator may be a resin, glass fiber, inorganic substance, or the like that is formed of a material stable to the electrolyte of this application. In some embodiments, the separator includes a porous sheet or nonwoven fabric-like substance having an excellent fluid retention property, or the like. Examples of the material of the resin or glass fiber separator may include but are not limited to polyolefin, aromatic polyamide, polytetrafluoroethylene, and polyethersulfone. In some embodiments, the polyolefin is polyethylene or polypropylene. In some embodiments, the polyolefin is polypropylene. The material of the separator may be used alone or in any combination.

The separator may alternatively be a material formed by laminating the foregoing materials, and examples thereof include but are not limited to a three-layer separator formed by laminating polypropylene, polyethylene, and polypropylene in order.

Examples of the material of the inorganic substance may include but are not limited to oxides such as aluminum oxide and silicon dioxide, nitrides such as aluminum nitride and silicon nitride, and sulfates (for example, barium sulfate and calcium sulfate). The form of the inorganic substance may include but is not limited to a granular or fibrous form.

The form of the separator may be a thin-film form, and examples thereof include but are not limited to a non-woven fabric, a woven fabric, and a microporous film. In the thin-film form, the separator has a pore diameter of 0.01 μm to 1 μm and a thickness of 5 μm to 50 μm. In addition to the standalone thin-film-like separator, the following separator may alternatively be used: a separator that is obtained by using a resin-based binder to form a composite porous layer containing inorganic particles on the surface of the positive electrode and/or the negative electrode, for example, a separator that is obtained by using fluororesin as a binder to form a porous layer on two surfaces of the positive electrode with alumina particles of which 90% have a particle size less than 1 μm.

The thickness of the separator is random. In some embodiments, the thickness of the separator is greater than 1 μm, 5 μm, or 8 μm. In some embodiments, the thickness of the separator is less than 50 μm, 40 μm, or 30 μm. In some embodiments, the thickness of the separator is within a range defined by any two of the foregoing values. When the thickness of the separator is within the foregoing range, its insulation performance and mechanical strength can be ensured, helping the rate performance and energy density of the electrochemical apparatus.

When a porous material such as a porous sheet or a nonwoven fabric is used as the separator, the porosity of the separator is random. In some embodiments, the porosity of the separator is greater than 10%, 15%, or 20%. In some embodiments, the porosity of the separator is less than 60%, 50%, or 45%. In some embodiments, the porosity of the separator is within a range defined by any two of the foregoing values. When the porosity of the separator is within the foregoing range, the insulation performance and the mechanical strength can be ensured and the film resistance can be suppressed, so that the electrochemical apparatus has good safety performance.

The average pore diameter of the separator is also random. In some embodiments, the average pore diameter of the separator is less than 0.5 μm or less than 0.2 μm. In some embodiments, the average pore diameter of the separator is greater than 0.05 μm. In some embodiments, the average pore diameter of the separator is within a range defined by any two of the foregoing values. If the average pore diameter of the separator exceeds the foregoing range, a short circuit is likely to occur. When the average pore diameter of the separator is within the foregoing range, the electrochemical apparatus has good safety performance.

V. Assemblies of the electrochemical apparatus

The components of the electrochemical apparatus include an electrode assembly, a collector structure, an outer packing case, and a protective unit.

Electrode assembly

The electrode assembly may be any one of a laminated structure in which the positive electrode and the negative electrode are laminated with the separator interposed therebetween, and a structure in which the positive electrode and the negative electrode are wound in a swirl shape with the separator interposed therebetween. In some embodiments, a mass percentage of the electrode assembly (occupancy of the electrode assembly) in the internal volume of the battery is greater than 40% or greater than 50%. In some embodiments, the occupancy of the electrode assembly is less than 90% or less than 80%. In some embodiments, the occupancy of the electrode assembly is within a range defined by any two of the foregoing values. When the occupancy of the electrode assembly is within the foregoing range, the capacity of the electrochemical apparatus can be ensured, and degradation of repeated charge/discharge performance and high temperature storage property caused by an increasing internal pressure can be inhibited.

Collector structure

The collector structure is not particularly limited. In some embodiments, the collector structure is a structure that helps reduce the resistance of wiring portions and bonding portions. When the electrode assembly is the foregoing laminated structure, a structure in which metal core portions of the electrode layers are bundled and welded to terminals can be used. An increase in one electrode area causes a higher internal resistance; and therefore, it is also acceptable that two or more terminals are provided in the electrode to decrease the resistance. When the electrode assembly has the foregoing winding structure, two or more lead structures are provided at each of the positive electrode and the negative electrode, and are bundled at the terminals, so as to reduce the internal resistance.

Outer packing case

The material of the outer packing case is not particularly limited, provided that the material is a substance stable to the electrolyte in use. The outer packing case may use, but is not limited to a nickel-plated steel plate, stainless steel, metals such as aluminum, aluminum alloy, or magnesium alloy, or laminated films of resin and aluminum foil. In some embodiments, the outer packing case is made of metal including aluminum or an aluminum alloy, or is made of a laminated film.

The metal outer packing case includes but is not limited to a sealed packaging structure formed by depositing metal through laser welding, resistance welding, or ultrasonic welding; or a riveting structure formed by using the foregoing metal or the like with a resin pad disposed therebetween. The outer packing case using the laminated film includes but is not limited to a sealed packaging structure formed by thermally adhering resin layers. In order to improve the sealing property, a resin different from the resin used in the laminated film may be sandwiched between the resin layers. When the sealed structure is formed by thermally adhering the resin layers through current collecting terminals, a resin having a polar group or a modified resin into which a polar group is introduced may be used as the sandwiched resin in consideration of the bonding of metal and resin. In addition, the outer packing case may be in any random shape. For example, it may have any one of a cylindrical shape, a square shape, a laminated form, a button form, a large form, or the like.

Protective unit

The protection unit may use a positive temperature coefficient (PTC), a temperature fuse, or a thermistor whose resistance increases during abnormal heat release or excessive current flows, a valve (current cutoff valve) for cutting off a current flowing in a circuit by sharply increasing an internal pressure or an internal temperature of a battery during abnormal heat release, or the like. The protection unit may be selected from elements that do not operate in conventional high-current use scenarios, or such design may be used that abnormal heat release or thermal runaway does not occur even without a protection unit.

VI. Application

The electrochemical apparatus according to this application includes any apparatus in which electrochemical reactions take place. Specific examples of the apparatus include all kinds of primary batteries, secondary batteries, fuel batteries, solar batteries, or capacitors. Specially, the electrochemical apparatus is a lithium secondary battery, including a lithium metal secondary battery or a lithium-ion secondary battery.

This application also provides an electronic apparatus, including the electrochemical apparatus according to this application.

A purpose of the electrochemical apparatus in this application is not particularly limited. It can be used for any

known electronic apparatus in the prior art. In some embodiments, the electrochemical apparatus of this application may be used for, without limitation, a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

The following uses a lithium-ion battery as an example and describes preparation of a lithium-ion battery with reference to specific examples. Those skilled in the art understands that the preparation method described in this application is only an example, and that all other suitable preparation methods fall within the scope of this application.

## Examples

The following describes performance evaluation performed based on examples and comparative examples of the lithium-ion battery in this application.

### I. Preparation of lithium-ion battery

1. Preparation of negative electrode

Artificial graphite, rubber, and sodium carboxymethylcellulose were mixed based on a mass ratio of 96%:2%:2% in deionized water. The mixture was stirred evenly to obtain a negative electrode slurry. The negative electrode slurry was applied onto a 12 μm current collector. After steps of drying, cold pressing, cutting, and tab welding, a negative electrode was obtained.

| Rubber | Title |
|---|---|
| 1 | Styrene-butadiene rubber (SBR) |
| 2 | Copolymer of acrylate and styrene-butadiene rubber |
| 3 | Styrene-acrylate copolymer |
| 4 | Blend of chlorotrifluoroethylene and styrene-butadiene rubber |
| 5 | Blend of HFP (hexafluoropropylene) and styrene-butadiene rubber |

2. Preparation of positive electrode

Lithium cobalt oxide ($LiCoO_2$), a conductive material (Super-P), and polyvinylidene fluoride (PVDF) were mixed based on a mass ratio of 95%:2%:3% in N-methylpyrrolidone (NMP) and stirred uniformly to obtain a positive electrode slurry. The positive electrode slurry was applied onto an aluminum foil of 12 μm. After steps of drying, cold pressing, cutting, and tab welding, a positive electrode was obtained.

3. Preparation of electrolyte

Under a dry argon environment, EC, PC, and DEC (based on a weight ratio of 1:1:1) were mixed, and $LiPF_6$ was added and stirred uniformly to obtain a base electrolyte, where the concentration of $LiPF_6$ was 1.15 mol/L. Different amounts of additives were added to the base electrolyte, to obtain different electrolytes used in different examples and comparative examples.

Abbreviations and names of constituents in the electrolyte are shown in the table below:

| Name of material | Abbreviation | Name of material | Abbreviation |
|---|---|---|---|
| Ethylene carbonate | EC | Propylene carbonate | PC |
| Ethyl methyl carbonate | EMC | Ethyl propionate | EP |
| Propyl propionate | PP | Fluoroethylene carbonate | FEC |
| Butanedinitrile | SN | Adiponitrile | ADN |

(continued)

| Name of material | Abbreviation | Name of material | Abbreviation |
|---|---|---|---|
| Ethylene glycol di(2-cyanoethyl) ether | EDN | 1,3,6-hexanetricarbonitrile | HTCN |
| 1,2,3-tris(2-cyanoethoxy) propane | TCEP | Lithium difluorophosphate | $LiPO_2F_2$ |
| 1,3-propanesulfonate | PS | Difluoroethylene carbonate | DFEC |
| Compound of formula 1-1 | Formula 1-1 | Compound of formula 1-2 | Formula 1-2 |

4. Preparation of separator

A polyethylene (PE) porous polymer film was used as the separator.

5. Preparation of lithium-ion battery

The resulting positive electrode, separator, and negative electrode were wound in order and placed in an outer packing foil, leaving a liquid injection hole. The electrolyte was injected from the liquid injection hole which was then sealed. Then, formation and grading were performed to obtain a lithium-ion battery.

**II. Test method**

1. Test method for swelling rate of lithium-ion battery after high-temperature storage

At 25°C, the lithium-ion battery was left standing for 30 minutes, then charged to 4.45 V at a constant current at a rate of 0.5C, then charged to 0.05C at a constant voltage of 4.45 V, left standing for 5 minutes, and thickness of the lithium-ion battery was measured. The thickness of the lithium-ion battery was measured again after storage at 60°C for 21 days. A swelling rate of the lithium-ion battery after high-temperature storage was calculated via the following formula:

$$\text{swelling rate after high-temperature storage} = [(\text{thickness after storage} - \text{thickness before storage})/\text{thickness before storage}] \times 100\%.$$

2. Test method for overcharge deformation rate of lithium-ion battery

At 25°C, the lithium-ion battery was left standing for 30 minutes, then charged to 4.45 V at a constant current at a rate of 0.5C, then charged to 0.05C at a constant voltage of 4.45 V, left standing for 60 minutes, and thickness T1 of the lithium-ion battery was measured. The lithium-ion battery was then charged at a constant current at a rate of 0.1C for 60 minutes, and left standing for 30 minutes. This step was repeated 5 times, so that the lithium-ion battery reaches a 150% state of charge (SOC), and thickness T2 of the lithium-ion battery was measured.

$$\text{overcharge deformation rate} = [(T2-T1)/T1]\times 100\%.$$

**III. Test result**

Table 1 shows influence of adhesion strength of the negative electrode active substance and propionate in the electrolyte on the swelling rate after high-temperature storage and the overcharge deformation rate of the lithium-ion battery.

**Table 1**

| | Rubber | F (N/cm$^2$) | Propionate | | F/X | Swelling rate after high-temperature storage | Overcharge deformation rate |
|---|---|---|---|---|---|---|---|
| | | | Type | Percentage X (%) | | | |
| Comparative example 1-1 | 1 | 80 | / | / | 0 | 25.3% | 24.8% |
| Comparative example 1-2 | 2 | 100 | / | / | 0 | 24.1% | 23.1% |
| Comparative example 1-3 | 3 | 150 | / | / | 0 | 22.3% | 21.3% |
| Comparative example 1-4 | 1 | 80 | PP | 5 | 16 | 21.2% | 21.5% |
| Example 1-1 | 2 | 100 | PP | 3 | 33.3 | 17.5% | 16.9% |
| Example 1-2 | 2 | 100 | PP | 20 | 5 | 14.2% | 13.1% |
| Example 1-3 | 2 | 100 | PP | 30 | 3.3 | 13.9% | 12.5% |
| Example 1-4 | 2 | 100 | PP | 62.5 | 1.6 | 16.1% | 15.2% |
| Example 1-5 | 3 | 150 | PP | 20 | 7.5 | 12.3% | 11.8% |
| Example 1-6 | 4 | 150 | PP | 20 | 7.5 | 12.5% | 12.1% |
| Example 1-7 | 3 | 150 | EP | 20 | 7.5 | 13.2% | 13.1% |
| Example 1-8 | 4 | 150 | EP | 20 | 7.5 | 13.6% | 14.2% |
| Example 1-9 | 4 | 200 | EP | 1 | 200 | 18.6% | 19.3% |
| Example 1-10 | 4 | 100 | EP | 70 | 1.4 | 17.9% | 18.2% |
| Example 1-11 | 4 | 500 | EP | 20 | 25 | 13.1% | 12.8% |
| Example 1-12 | 4 | 500 | EP | 5 | 100 | 14.2% | 14.8% |
| Example 1-13 | 2 | 400 | PP | 65 | 6.2 | 17.2% | 15.8% |

"/" means no addition or having no such characteristic

The results show that when the adhesion strength of the negative electrode active substance ranges from 100 N/cm$^2$ to 500 N/cm$^2$ and the electrolyte includes propionate, swelling or contraction of the negative electrode caused in the charging/discharging process can be inhibited, and an interface between the negative electrode mixture layer and the electrolyte can be stabilized, thereby significantly reducing the swelling rate after high-temperature storage and the overcharge deformation rate of the lithium-ion battery.

When the adhesion strength F N/cm$^2$ of the negative electrode active substance and the percentage X% of the propionate in the electrolyte satisfy $1.6 \leq F/X \leq 100$, the swelling rate after high-temperature storage and the overcharge deformation rate of the lithium-ion battery can be further reduced.

Table 2 shows influence of the specific surface area of the negative electrode mixture layer on the swelling rate after high-temperature storage and the overcharge deformation rate of the lithium-ion battery. Example 2-1 to

example 2-6 differ from example 1-1 or example 1-5 only in a parameter listed in Table 2.

**Table 2**

| | Rubber | F ($N/cm^2$) | A ($m^2/g$) | F/A | Swelling rate after high-temperature storage | Overcharge deformation rate |
|---|---|---|---|---|---|---|
| Example 1-1 | 2 | 100 | 6 | 16.7 | 17.5% | 16.9% |
| Example 1-5 | 3 | 150 | 2 | 75 | 12.3% | 11.8% |
| Example 2-1 | 2 | 150 | 3 | 50 | 11.5% | 11.2% |
| Example 2-2 | 3 | 150 | 5 | 30 | 12.1% | 11.6% |
| Example 2-3 | 4 | 200 | 5 | 40 | 12.9% | 12.1% |
| Example 2-4 | 4 | 500 | 1.92 | 260 | 19.5% | 17.7% |
| Example 2-5 | 4 | 250 | 2 | 125 | 13.8% | 13.1% |
| Example 2-6 | 4 | 500 | 2 | 250 | 15.1% | 13.9% |

The results show that when the specific surface area of the negative electrode mixture layer ranges from 2 $m^2/g$ to 5 $m^2/g$, the swelling rate after high-temperature storage and the overcharge deformation rate of the lithium-ion battery can be further reduced. When the specific surface area A $m^2/g$ of the negative electrode mixture layer and the adhesion strength F $N/cm^2$ of the negative electrode active substance satisfy $20 \leq F/A \leq 250$, the swelling rate after high-temperature storage and the overcharge deformation rate of the lithium-ion battery can be further reduced.

Table 3 shows the influence of trace metal in the negative electrode active substance on the swelling rate after high-temperature storage and the overcharge deformation rate of the lithium-ion battery. Example 3-1 to example 3-8 differ from example 1-1 only in a parameter listed in Table 3.

**Table 3**

| | Metal | | Swelling rate after high-temperature storage | Overcharge deformation rate |
|---|---|---|---|---|
| | Type | Percentage (%) | | |
| Example 1-1 | / | / | 17.5% | 16.9% |
| Example 3-1 | Fe | 0.001 | 13.7% | 13.1% |
| Example 3-2 | Cu | 0.001 | 15.2% | 13.6% |
| Example 3-3 | Mo<br>Fe | 0.003<br>0.001 | 14.1% | 13.4% |
| Example 3-4 | Mo<br>Cu | 0.002<br>0.002 | 13.6% | 13.1% |

(continued)

| | Metal | | Swelling rate after high-temperature storage | Overcharge deformation rate |
|---|---|---|---|---|
| | Type | Percentage (%) | | |
| Example 3-5 | Fe<br>Cu | 0.0008<br>0.0006 | 13.9% | 13.2% |
| Example 3-6 | Fe<br>Cu | 0.01<br>0.01 | 12.5% | 13.5% |
| Example 3-7 | Fe<br>Cu | 0.02<br>0.03 | 14.5% | 15.1% |
| Example 3-8 | Fe<br>Cu | 0.03<br>0.05 | 18.6% | 16.7% |

The results show that when there is the trace metal (iron, molybdenum, and/or copper) in the negative electrode active substance, the swelling rate after high-temperature storage and the overcharge deformation rate of the lithium-ion battery can be further reduced.

Table 4 shows influence of the constituent in the electrolyte on the swelling rate after high-temperature storage and the overcharge deformation rate of the lithium-ion battery. Example 4-1 to example 4-31 differ from example 1-1 only in a parameter listed in Table 4.

**Table 4**

| | Fluorocarbonate (6%) | Organic compound having cyano group (2%) | $LiPO_2F_2$ (0.5%) | Compound of formula 1 (0.5%) | Swelling rate after high-temperature storage | Overcharge deformation rate |
|---|---|---|---|---|---|---|
| Example 1-1 | / | / | / | / | 17.5% | 16.9% |
| Example 4-1 | FEC | / | / | / | 12.5% | 12.6% |
| Example 4-2 | DFEC | / | / | / | 13.6% | 12.1% |
| Example 4-3 | / | ADN | / | / | 10.8% | 9.5% |
| Example 4-4 | / | SN | / | / | 9.4% | 8.3% |
| Example 4-5 | / | HTCN | / | / | 8.9% | 9.1% |
| Example 4-6 | / | EDN | / | / | 8.5% | 8.6% |
| Example 4-7 | / | TCEP | / | / | 8.1% | 8.0% |
| Example 4-8 | / | / | $LiPO_2F_2$ | / | 9.2% | 9.9% |
| Example 4-9 | / | / | / | Formula 1-1 | 8.2% | 8.7% |
| Example 4-10 | / | / | / | Formula 1-2 | 8.0% | 7.8% |
| Example 4-11 | / | / | $LiPO_2F_2$ | Formula 1-1 | 7.5% | 7.6% |

(continued)

| | Fluorocarbonate (6%) | Organic compound having cyano group (2%) | $LiPO_2F_2$ (0.5%) | Compound of formula 1 (0.5%) | Swelling rate after high-temperature storage | Overcharge deformation rate |
|---|---|---|---|---|---|---|
| Example 4-12 | FEC | ADN | / | / | 7.1% | 5.9% |
| Example 4-13 | FEC | SN | / | / | 6.6% | 5.6% |
| Example 4-14 | FEC | HTCN | / | / | 6.2% | 5.1% |
| Example 4-15 | FEC | EDN | / | / | 6.0% | 4.6% |
| Example 4-16 | FEC | TCEP | / | / | 5.8% | 5.7% |
| Example 4-17 | FEC | / | $LiPO_2F_2$ | / | 5.2% | 4.9% |
| Example 4-18 | FEC | / | / | Formula 1-1 | 5.1% | 4.3% |
| Example 4-19 | FEC | / | / | Formula 1-2 | 5.0% | 5.1% |
| Example 4-20 | FEC | / | $LiPO_2F_2$ | Formula 1-1 | 4.9% | 5.4% |
| Example 4-21 | FEC | HTCN | $LiPO_2F_2$ | / | 4.8% | 4.6% |
| Example 4-22 | / | HTCN | / | Formula 1-1 | 4.3% | 4.1% |
| Example 4-23 | / | HTCN | / | Formula 1-2 | 4.4% | 4.5% |
| Example 4-24 | / | HTCN | $LiPO_2F_2$ | Formula 1-1 | 4.2% | 4.3% |
| Example 4-25 | / | TCEP | / | Formula 1-1 | 4.1% | 3.3% |
| Example 4-26 | / | TCEP | / | Formula 1-2 | 3.8% | 4.0% |
| Example 4-27 | / | TCEP | $LiPO_2F_2$ | Formula 1-1 | 3.5% | 3.6% |
| Example 4-28 | FEC | TCEP | $LiPO_2F_2$ | / | 3.2% | 3.0% |
| Example 4-29 | FEC | TCEP | / | Formula 1-1 | 4.1% | 3.3% |
| Example 4-30 | FEC | HTCN | $LiPO_2F_2$ | Formula 1-1 | 3.1 % | 2.8% |
| Example 4-31 | FEC | TCEP | $LiPO_2F_2$ | Formula 1-1 | 3.0% | 2.6% |
| "/" means no addition or having no such characteristic | | | | | | |

The results show that when the adhesion strength of the negative electrode active substance ranges from 100 N/cm$^2$ to 500 N/cm$^2$ and the electrolyte includes propionate, and the electrolyte further includes the fluorocarbonate, the organic compound having a cyano group, the lithium difluorophosphate, and/or the compound of formula 1, the swelling rate after high-temperature storage and the overcharge deformation rate of the lithium-ion battery can be further reduced.

Table 5 shows influence of a relationship between the percentage X% of the propionate in the electrolyte and the percentage b% of the compound having a cyano group on the swelling rate after high-temperature storage and the overcharge deformation rate of the lithium-ion battery. Example 5-1 to example 5-8 differ from example 1-1 or example 4-3 only in a parameter listed in Table 5.

**Table 5**

| | **Propionate** | | **Compound having cyano group** | | **X/b** | **Swelling rate after high-temperatur e storage** | **Overcharge deformatio n rate** |
|---|---|---|---|---|---|---|---|
| | **Typ e** | **Percentag e X (%)** | **Type** | **Percentag e b (%)** | | | |
| Example 1-1 | PP | 10 | / | / | ∞ | 17.5% | 16.9% |
| Example 4-3 | PP | 10 | AD N | 2 | 5 | 10.8% | 9.5% |
| Example 5-1 | PP | 3 | AD N | 10 | 0.3 | 16.9% | 15.7% |
| Example 5-2 | PP | 60 | AD N | 0.2 | 300 | 17.1% | 16.2% |
| Example 5-3 | PP | 30 | SN | 6 | 5 | 6.8% | 6.5% |
| Example 5-4 | PP | 5 | SN | 10 | 0.5 | 15.1% | 12.1% |
| Example 5-5 | PP | 20 | SN | 0.1 | 200 | 15.3% | 12.5% |
| Example 5-6 | PP | 20 | SN | 0.01 | 200 0 | 16.5% | 15.2% |
| Example 5-7 | PP | 20 | SN | 0.005 | 400 0 | 17.3% | 16.5% |
| Example 5-8 | PP | 20 | SN | 12 | 1.67 | 17.4% | 15.8% |
| "/" means no addition or having no such characteristic | | | | | | | |

The results show that when the percentage of the compound having a cyano group in the electrolyte ranges from 0.01% to 10%, the swelling rate after high-temperature storage and the overcharge deformation rate of the lithium-ion battery can be further reduced. When the percentage X% of the propionate in the electrolyte and the percentage b% of the compound having a cyano group satisfy $0.5 \leq X/b \leq 200$, the high-temperature storage performance and overcharge protection performance of the electrochemical apparatus can be further improved.

In this specification, reference to "an embodiment", "some embodiments", "one embodiment", "another example", "an example", "a specific example", or "some examples" means that at least one embodiment or example in this application includes a specific feature, structure, material, or characteristic described in this embodiment or example. Accordingly, descriptions appearing in the specification, such as "in some embodiments", "in the embodiments", "in an embodiment", "in another example", "in an example", "in a particular example", or "for example", are not necessarily references to the same embodiments or examples in this application. In addition, a specific feature, structure, material, or characteristic herein may be combined in any appropriate manner in one or more embodiments or examples.

Although illustrative embodiments have been demonstrated and described, those skilled in the art should understand that the foregoing embodiments are not to be construed as limiting this application, and that some embodiments may be changed, replaced, and modified without departing from the spirit, principle, and scope of this application.

## Claims

**1.** An electrochemical apparatus, comprising a positive electrode, a negative electrode, and an electrolyte, wherein the negative electrode comprises a negative electrode current collector and a negative electrode mixture layer formed on the negative electrode current collector, and the negative electrode mixture layer comprises a negative electrode active substance;

adhesion strength of the negative electrode active substance is F $N/cm^2$, and F ranges from 100 to 500; and the electrolyte comprises propionate.

**2.** The electrochemical apparatus according to claim 1, wherein the negative electrode mixture layer comprises rubber, and the rubber comprises at least one of styrene-butadiene rubber, isoprene rubber, butadiene rubber, fluorine rubber, acrylonitrile-butadiene rubber, or styrene-propylene rubber.

**3.** The electrochemical apparatus according to claim 2, wherein the rubber further comprises at least one of an acrylic functional group, a chlorotrifluoroethylene functional group, or a hexafluoropropylene functional group.

**4.** The electrochemical apparatus according to claim 1, wherein based on a weight of the electrolyte, a percentage of the propionate is X%, and X ranges from 5 to 65.

**5.** The electrochemical apparatus according to claim 4, wherein F and X satisfy $1.6 \leq F/X \leq 100$.

**6.** The electrochemical apparatus according to claim 1, wherein a specific surface area of the negative electrode mixture layer is A $m^2/g$, and A ranging from 2 to 5.

**7.** The electrochemical apparatus according to claim 6, wherein F and A satisfy $20 \leq F/A \leq 250$.

**8.** The electrochemical apparatus according to claim 1, wherein the negative electrode active substance has at least one of the following characteristics:

(a) having a median particle size of 5 $\mu m$ to 30 $\mu m$;
(b) comprising at least one of artificial graphite, natural graphite, mesocarbon microbeads, soft carbon, hard carbon, amorphous carbon, a silicon-containing material, a tin-containing material, or an alloy material; or
(c) comprising metal, wherein the metal comprises at least one of molybdenum, iron, or copper, and based on a weight of the negative electrode mixture layer, a percentage of the metal is lower than 0.05%.

**9.** The electrochemical apparatus according to claim 1, wherein the electrolyte further comprises at least one of the following compounds:

fluorocarbonate;
a compound having a cyano group;
lithium difluorophosphate; or
a compound of formula 1:

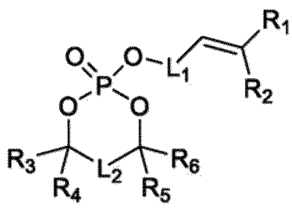

formula 1,

wherein $R^1$, $R^2$, $R^3$, $R^4$, $R^5$, and $R^6$ are each independently hydrogen or a $C_1$-$C_{10}$ alkyl group;
$L_1$ and $L_2$ are each independently $-(CR^7R^8)_n-$;
$R^7$ and $R^8$ are each independently hydrogen or a $C_1$-$C_{10}$ alkyl group; and

n is 1, 2, or 3.

**10.** The electrochemical apparatus according to claim 9, wherein the compound of formula 1 comprises at least one of the following compounds:

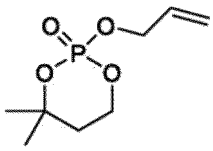 formula 1-1, 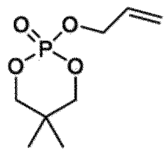 formula 1-2,

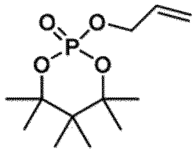 formula 1-3, 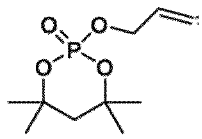 formula 1-4,

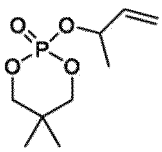 formula 1-5, or 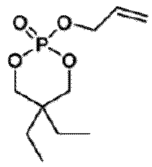 formula 1-6.

**11.** The electrochemical apparatus according to claim 9, wherein based on the weight of the electrolyte, a percentage of the compound of formula 1 ranges from 0.01% to 5%.

**12.** The electrochemical apparatus according to claim 9, wherein based on the weight of the electrolyte, a percentage of the compound having a cyano group is b%, and b ranges from 0.01 to 10.

**13.** The electrochemical apparatus according to claim 12, wherein based on the weight of the electrolyte, a percentage of the propionate is X%, X ranges from 5 to 65, and $0.5 \leq X/b \leq 200$.

**14.** An electronic apparatus, comprising the electrochemical apparatus according to any one of claims 1 to 13.

**INTERNATIONAL SEARCH REPORT**

International application No. **PCT/CN2020/121179**

**A. CLASSIFICATION OF SUBJECT MATTER**

H01M 4/62(2006.01)i; H01M 10/0569(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS, CNKI, WPI, EPODOC: 宁德新能源, 粘接强度, 粘结强度, 结合强度, 负极合剂, 活性, 电解液, 丙烯酯, 氟代碳酸酯, 氰基, 二氟磷酸锂, 磷酸 20w 酯, 环状磷酸酯, electrolyte, electronic, electrochemical, cyclic w phosphate, adhesive s intensity, carbonic w ester, fluorin, CN, cyan, difluoro s phosphate s lithium, LiPO2F2, cathode, active, acryl s ester

**C. DOCUMENTS CONSIDERED TO BE RELEVANT**

| Category* | Citation of document, with indication, where appropriate, of the relevant passages | Relevant to claim No. |
|---|---|---|
| Y | CN 111129592 A (NINGDE AMPEREX TECHNOLOGY LTD.) 08 May 2020 (2020-05-08) description paragraphs [0005], [0061]-[0235] | 1-14 |
| Y | CN 102428596 A (MATSUSHITA ELECTRIC INDUSTRY CO., LTD.) 25 April 2012 (2012-04-25) description paragraphs [0025], [0069], [0081] | 1-14 |
| Y | CN 111082138 A (SK INNOVATION CO., LTD.) 28 April 2020 (2020-04-28) description, paragraphs [0018]-[0041] | 9-14 |
| A | CN 103117411 A (SHENZHEN B & K RECHARGEABLE BATTERY INC.) 22 May 2013 (2013-05-22) entire document | 1-14 |
| A | CN 102315423 A (NINGBO INSTITUTE OF MATERIALS TECHNOLOGY AND ENGINEERING, CHINESE ACADEMY OF SCIENCES) 11 January 2012 (2012-01-11) entire document | 1-14 |
| A | CN 101397484 A (SHENZHEN BAK BATTERY CO., LTD.) 01 April 2009 (2009-04-01) entire document | 1-14 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **02 June 2021** | **24 June 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT

International application No.
PCT/CN2020/121179

C. DOCUMENTS CONSIDERED TO BE RELEVANT

| Category* | Citation of document, with indication, where appropriate, of the relevant passages | Relevant to claim No. |
|---|---|---|
| A | KR 20150128564 A (LG CHEMICAL LTD.) 18 November 2015 (2015-11-18) entire document | 1-14 |
| A | CN 102487138 A (SHANGHAI BYD CO., LTD.) 06 June 2012 (2012-06-06) entire document | 1-14 |

Form PCT/ISA/210 (second sheet) (January 2015)

**INTERNATIONAL SEARCH REPORT**
**Information on patent family members**

International application No.
**PCT/CN2020/121179**

| Patent document cited in search report | | | Publication date (day/month/year) | Patent family member(s) | | | Publication date (day/month/year) |
|---|---|---|---|---|---|---|---|
| CN | 111129592 | A | 08 May 2020 | None | | | |
| CN | 102428596 | A | 25 April 2012 | JP | WO2011121902 | A1 | 04 July 2013 |
| | | | | CN | 102428596 | B | 10 September 2014 |
| | | | | KR | 20120022954 | A | 12 March 2012 |
| | | | | WO | 2011121902 | A1 | 06 October 2011 |
| | | | | US | 8728665 | B2 | 20 May 2014 |
| | | | | US | 2012064415 | A1 | 15 March 2012 |
| CN | 111082138 | A | 28 April 2020 | US | 2020127333 | A1 | 23 April 2020 |
| | | | | KR | 20200044539 | A | 29 April 2020 |
| CN | 103117411 | A | 22 May 2013 | None | | | |
| CN | 102315423 | A | 11 January 2012 | None | | | |
| CN | 101397484 | A | 01 April 2009 | None | | | |
| KR | 20150128564 | A | 18 November 2015 | KR | 101720413 | B1 | 27 March 2017 |
| CN | 102487138 | A | 06 June 2012 | CN | 102487138 | B | 10 December 2014 |

Form PCT/ISA/210 (patent family annex) (January 2015)